# EUROPEAN PATENT SPECIFICATION

(11) **EP 3 400 728 B1**
(45) Date of publication and mention of the grant of the patent: **10.03.2021**
(21) Application number: 17701923.9
(22) Date of filing: 03.01.2017
(51) Int. Cl.: H04W 4/90, H04W 4/06

(54) **METHODS AND SYSTEMS FOR MANAGING ALERT MESSAGES**
VERFAHREN UND SYSTEME ZUR VERWALTUNG VON ALARMMELDUNGEN
PROCÉDÉS ET SYSTÈMES DE GESTION DE MESSAGES D'ALERTE

(30) Priority: 04.01.2016 IN 201611000217
(43) Date of publication of application: 14.11.2018
(73) Proprietor: Everbridge Norway AS, 0663 Oslo (NO)
(72) Inventor: POLU, Srinivasa Rao, Bangalore 560078 (IN)
(74) Representative: CSY London
(86) International application number: PCT/IB2017/050009
(87) International publication number: WO 2017/118918

(56) References cited:
- US-A1- 2007 117 538
- US-A1- 2007 123 220
- US-A1- 2011 291 851
- US-A1- 2013 309 959
- US-A1- 2014 200 014
- IGNACIO AEDO ET AL: "Personalized Alert Notifications and Evacuation Routes in Indoor Environments", SENSORS, vol. 12, no. 12, 8 June 2012 (2012-06-08), pages 7804-7827, XP55358690, DOI: 10.3390/s120607804

## Description

### TECHNICAL FIELD

The present invention generally relates to managing alert messages in a communication network. More specifically, the present invention relates to managing Cell Broadcast (CB) alert messages in a wireless communication network.

### BACKGROUND

Today, wireless communication network play a vital role in collaborating and exchanging information and have become an essential means for communication, information exchange and for broadcasting information. The wireless communication network, like a cellular communication network, offers variety of services. The services include, but are not limited to, voice communication services, data based services and alert based services (like information broadcast services). The voice communication services allow mobile communication devices associated with the wireless communication network to establish high quality and reliable communication with other communication devices. The data based services facilitate data sessions between data servers and the mobile communication devices to exchange data packets and provides users of mobile communication devices with Internet Protocol (IP) capability. The mobile communication devices are associated with a variety of applications software (commonly called as apps) for using the data services. The apps includes, but are not limited to, web browsers, Electronic mails, Text Messaging apps, Internet based apps, and Collaborative apps. These apps are either preinstalled or are usually installed from websites or from application distribution platform, like Apple App store, Google Play store, and the like. The apps could be mobile device based apps or Subscriber Identity Module (SIM) based apps.

In addition to the above services, the wireless communication network is also widely used for information broadcast services. An example of such service is broadcasting emergency alert messages to users of mobile communication devices (also referred as subscribers). The alert messages are generally sent to a large number of subscribers over the wireless communication network for alerting or for providing relevant information to subscribers in alert based situations, for example, emergency events, business needs, promotional events, launch of government schemes and the like. Hence, typically such broadcast services are designed to operate with the wireless communication network to alert subscribers of any emergencies and other alert events. In an example, during an emergency situation such as an earthquake, a tornado or a severe thunderstorm in a location, an emergency authority may send an alert message via the information broadcasting service to warn subscribers in the location of the emergency situation. In another example, an advertisement agency may send, through the wireless communication network, a promotional message regarding a brand or a store to targeted subscribers.

US 2013/0309959 (A1) discloses a communication device includes a receiving unit configured to receive an instruction signal, which instructs the keeping of records regarding specific broadcast information, from a transmission source of the specific broadcast information, a storing unit configured to retain the records regarding the specific broadcast information in the case where the receiving unit receives the specific broadcast information broadcast from the transmission source, and a transmission unit configured to transmit to the transmission source a notification signal indicating that the records regarding the specific broadcast information are retained, wherein in the case where the receiving unit receives a request signal sent from the transmission source in response to the notification signal, the transmission unit transmits to the transmission source a reporting signal including at least an identifier identifying the specific broadcast information.

WO2007/144872 (A2) discloses Cellular emergency notification service transmitting Point-To-MultiPoint (P2MP) emergency service messages on one or more mandatory non-user configurable P2MP emergency channels to all available personal cellular telecommunications devices in one or more selected cells thereby ensuring mandatory reception.

US2014/200014 (A1) discloses A mobile station apparatus is configured to receive a broadcast message broadcasted from a radio communication network in a downlink physical channel to be received by a plurality of mobile stations in a standby state (e.g., RRC_IDLE state, CELL_PCH state, or URA_PCH state). Further, the mobile station is configured to send a confirmation response indicating a reception status of the broadcast message to the radio communication network while remaining in the standby state without changing to a communication state (e.g., RRC_CONNECTED state or CELL_DCH state) in which user data can be transmitted and received. As a result, it is possible to enable the mobile station to efficiently send a confirmation response in response to a broadcast message while reducing the increase in the load on the radio communication network.

Ignacio Aedo ET AL: "Personalized Alert Notifications and Evacuation Routes in Indoor Environments" discloses a mechanism composed by three main components: CAP-ONES for notifying emergency alerts, NERES for defining emergency plans and generating personalized evacuation routes, and iNeres as the interface to receive and visualize these routes on smartphones.

The wireless communication network delivers these alert messages via various channels. One of the channels via which the alert is sent to subscribers is through Cell Broadcast (CB) service. In CB services, a message is sent to all the subscribers under a given area which is covered by Cell Site (CS). The cell site may include Base Transceiver Stations (BTS), Base Stations (BS) of Universal Mobile Telecommunication System (UMTS) and/or Evolved Universal Mobile Telecommunication System (EUMTS). The Base Stations (BS) of Universal Mobile Telecommunication System (UMTS) and Evolved Universal Mobile Telecommunication System (EUMTS) are called as NodeB and eNodeB respectively. However, during broadcast service, only those subscribers under the BTS, nodeB or eNodeB will receive these messages that have pre-configured cell broadcast channel services in their communication devices. Additionally, CB alert message relayed over the wireless communication network using CB technology, by default, does not have the capability to acknowledge reception of the CB alert message which is vital for emergency situations. For example, it is vital to know how many subscribers have actually received the CB alert message during an emergency situation to assess further strategy for subscribers in such emergency situation area.

Thus, there is a need to have further communication with mobile communication devices post-delivery of alert messages.

### SUMMARY

The invention is specified by a first independent claim (claim 1) referring to a method, and by a second independent claim (claim 12) referring to a system. Further embodiments are specified by the dependent claims.

Various methods, systems and computer readable mediums for managing Cell Broadcast (CB) alert messages are disclosed. In an embodiment, a method of managing Cell Broadcast (CB) alert messages in a wireless communication network comprises sending, by a CB alert system, a CB alert message to a plurality of communication devices in an alert area through a wireless communication channel. In the embodiment, each of the plurality of communication devices includes a CB message handling application. The method further comprises receiving one or more acknowledgement messages from one or more communication devices, in response to receipt of the CB alert message at the plurality of communication devices. The one or more acknowledgement messages are received from the CB message handling application in respective communication devices

In another embodiment, a Cell Broadcast (CB) alert system for managing CB alert messages is provided. The CB alert system comprises a memory to store instructions for managing the CB alert messages. The CB alert system further comprises a processor operatively coupled with the memory to fetch instructions from the memory and manage CB alert messages. The processor is configured to send a CB alert message to a plurality of communication devices in an alert area through a wireless communication channel. In the embodiment, each of the plurality of communication devices comprises a CB message handling application. The processor is further configured to receive one or more acknowledgement messages from one or more communication devices, in response to receipt of the CB alert message at the plurality of communication devices. The one or more acknowledgement messages are received from the CB message handling application in respective communication devices.

The alert system may comprise a communication device for managing Cell Broadcast (CB) alert messages. The communication device comprises a memory comprising instructions of a CB message handling application. The communication device further comprises a processor communicably coupled to the memory for executing the instructions of the CB message handling application. The processor is configured to receive a CB alert message. The CB alert message is broadcasted by a CB alert system to a plurality of communication devices in an alert area through a wireless communication channel. The processor further sends an acknowledgement message to the CB alert system using CB message handling application, in response to receipt of the CB alert message.

Other aspects and example embodiments are provided in the drawings and the detailed description that follows

### BRIEF DESCRIPTION OF THE FIGURES

For a more complete understanding of example embodiments of the present technology, reference is now made to the following descriptions taken in connection with the accompanying drawings in which:
FIG. 1 illustrates an example environment, where various embodiments of the present technology may be practiced;
FIG. 2 is a block diagram of a Cell Broadcast (CB) alert system, in accordance with an example embodiment;
FIG. 3 illustrates a schematic block diagram of an example CB wireless communication system, in accordance with an example embodiment;
FIG. 4 illustrates an example depiction and method of defining an alert area in accordance with an example embodiment;
FIG. 5 illustrates a block diagram depicting interfaces associated with the CB alert system in accordance with an example embodiment;
FIG. 6 illustrates a sequence flow diagram for managing acknowledgement messages, in accordance with an example embodiment;
FIG. 7 illustrates a sequence flow diagram for managing acknowledgement messages, in accordance with another example embodiment;
FIG. 8 illustrates a sequence flow diagram for managing acknowledgement messages, in accordance with another example embodiment;
FIG. 9 illustrates a sequence flow diagram for managing acknowledgement messages, in accordance with another example embodiment;
FIG. 10 illustrates a sequence flow diagram for managing acknowledgement messages, in accordance with another example embodiment;
FIG. 11 illustrates a sequence flow diagram for managing acknowledgement messages, in accordance with another example embodiment;
FIG. 12 illustrates a sequence flow diagram for managing acknowledgement messages, in accordance with another example embodiment;
FIG. 13 illustrates a sequence flow diagram for managing acknowledgement messages, in accordance with another example embodiment;
FIG. 14 illustrates a sequence flow diagram for managing acknowledgement messages, in accordance with another example embodiment;
FIG. 15 illustrates a sequence flow diagram for managing acknowledgement messages, in accordance with another example embodiment;
FIG. 16 illustrates a sequence flow diagram for managing acknowledgement messages, in accordance with another example embodiment;
FIG. 17 illustrates a sequence flow diagram for managing acknowledgement messages, in accordance with another example embodiment;
FIG. 18 illustrates a method to send CB acknowledgement message using a Wi-Fi network, in accordance with an example embodiment;
FIG. 19 illustrates a method to send CB acknowledgement message using a Bluetooth network, in accordance with an example embodiment;
FIG. 20 illustrates a flow diagram of a method for managing Cell Broadcast (CB) alert messages, in accordance with an embodiment;
FIG. 21 illustrates a schematic block diagram of a mobile device, in accordance with an embodiment; and
FIG. 22 illustrates an exemplary depiction of communication devices in an alert area based on their capabilities to receive broadcast alert messages, in accordance with an embodiment.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly various requirements are described which may be requirements for some embodiments but not other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

The term 'alert event' used throughout the description includes any event in which bulk messages need to be sent a large subscriber base in any geographical area (also referred to as 'alert area'). The geographical area may range starting from a small cell area to as large as entire area covered by a wireless communication network. Examples of the alert event may include, but are not limited to emergency events, business promotions, meeting requests, government announcements, advertisements, and the like. Further, the terms users and subscribers are used interchangeably. Moreover, the terms user mobile devices, mobile devices and communication devices have been used interchangeably, and these components refer to a device from which a user can communicate with any network, such as a wireless, mobile, IP networks etc.

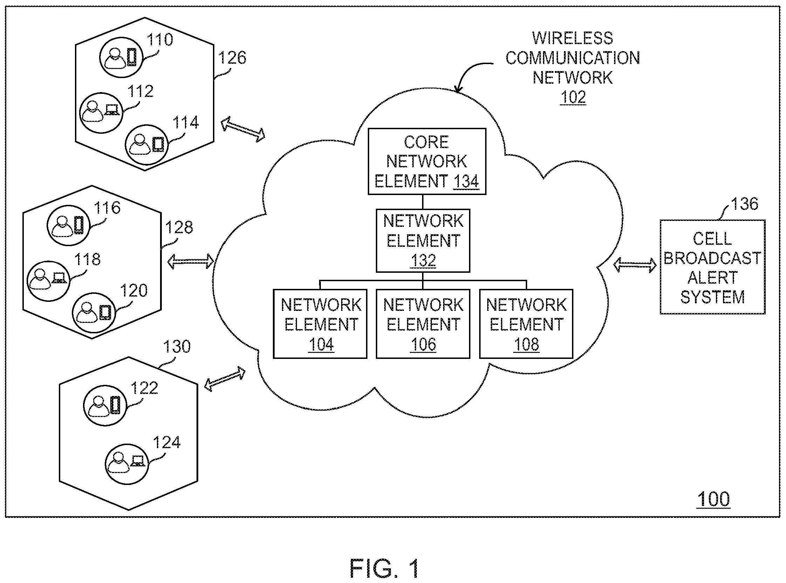

FIG. 1 illustrates an example environment 100, where various embodiments of the present technology may be practiced. An example representation of the environment 100 is shown depicting a wireless communication network 102 used by a plurality of users (also interchangeably referred to as 'subscribers') through their communication device (*e.g.,* mobile devices). In this example representation, the plurality of users, for example, a user 110, a user 112, a user 114, a user 116, a user 118, a user 120, a user 122 and a user 124 (hereinafter collectively referred to as the users 110-124) are shown. A Cell Broadcast (CB) alert system 136 may be associated with the wireless communication network 102. In an embodiment, the CB alert system 136 is a CB alert server which is configured to send CB alert messages to users in one or more alert areas (*e.g.,* to the users 110-124 in location areas 126-130) during an alert event. The alert event is an emergency situation or any other scenario that requires sending of CB alert message to large number of subscribers. For instance, examples of the alert event may include, but are not limited to, flash floods, tsunami, earthquakes, hurricane, tornados, severe thunderstorms and the like. In other examples, the CB alert system 136 may be used in a business environment, where a business manager may wish to send bulk alert messages (*e.g*., for an urgent meeting) to his/her employers located in various locations. Similarly, the CB alert system 136 may be used by a government agency to send bulk alert messages about launch of government schemes, etc.

The users 110-124 may communicate through the wireless communication network 102 in one or more forms of communication channels, for example, a voice channel, a video channel, a web channel, a messaging channel (such as a short message service (SMS) channel), an interactive voice response (IVR) channel, a native application channel and the like. At any particular time instance, each of the users 110-124 may be associated with a location area as defined in the wireless communication network 102. For example, the users 110, 112 and 114 are associated with the location area 126; the users 116, 118 and 120 are associated with the location area 128; and the users 122 and 124 are associated with the location area 130, respectively. Each user of the plurality of users may communicate in the wireless communication network 102 and is also capable of receiving CB alert messages from the CB alert system 136 on respective communication device(s). Examples of a communication device may include, but are not limited to, a cell phone, a Smartphone, a tablet device, a laptop integrated with wireless communication capability and the like.

Examples of the wireless communication network 102 may include cellular networks operating in accordance with protocols including, but not limited to, a second-generation (2G) wireless communication protocols such as IS-136 (time division multiple access (TDMA)), GSM (global system for mobile communication), and IS-95 (code division multiple access (CDMA)); a third-generation (3G) wireless communication protocol, such as Universal Mobile Telecommunications System (UMTS), CDMA1000, wideband CDMA (WCDMA) and time division-synchronous CDMA (TD-SCDMA); a 3.9G wireless communication protocol such as evolved universal terrestrial radio access network (E-UTRAN), a fourth-generation (4G) wireless communication protocol such as LTE (Long-Term Evolution) and a fifth-generation (5G) wireless communication protocol, or the like. In some scenarios, the wireless communication network 102 may also operate in conjunction with other forms of communication networks, for example, a landline network connected to a telephone exchange such as a public switched telephone network (PSTN), a wireless network, a private network (*i.e.* inside companies, call centres etc.,) and the like.

The wireless communication network 102 is constituted of a variety of network elements (*e.g*., base stations, controllers, switching centres, location registers, databases, gateways, etc.) that are interconnected in a tiered fashion for offering communication between user communication devices of the users 110-124, the CB alert system 136 and also with other connected networks. The network elements shown in the wireless communication network 102 are only for the example purposes, and as such, these are provided for the purposes of solely representing some of the example network elements utilized in the wireless communication network 102.

In the example representation of the wireless communication network 102, example network elements such as a network element 104, a network element 106, and a network element 108 (hereinafter referred to as the 'network elements 104-108') may correspond to base stations and related components in various mobile standards, for example, 2G, 3G, 4G, and the like. For instance, any of the network elements (104-108) may include but are not limited to, a transceiver station such as a base transceiver station (BTS), a Node B, an Evolved-Universal Terrestrial Radio Access Network (E-UTRAN) Node B (eNodeB), a Home NodeB (HNB) or a femtocell, an HNB gateway a Home eNodeB (HeNB) and the like. The network elements 104-108 may include equipment for transmitting and receiving signals such as radio signals from user mobile devices (such as the user mobile devices associated with the users 110-124). The network elements 104-108 may also facilitate communication with one or more node controllers that are utilized for controlling and communicating with the network elements 104-108 and the user communication devices. As shown in the wireless communication network 102, a network element 132 may be a node controller for controlling and communicating with the network elements (104-108), for example, node controller and related components in various mobile standards, for example, 2G, 3G, 4G, and the like. For instance, examples of the network element 132 may include, but are not limited to, a base station controller (BSC), a radio network controller (RNC), a mobility management entity (MME), a femtocell gateway (or an HNB gateway) and the like.

Typically, the network element (132) is a node controller configured to handle allocation of radio channels and to control handovers within the wireless communication network 102. As such, the network element 132 of the wireless communication network 102 is configured to manage a set of connections of the network elements 104-108 and reduce the number of connections towards a core network element 134. The network element 132 is depicted to control only three network elements (*e.g.,* 104-108) for example purposes, and it is understood that the network element 132 may communicate with such numerous network elements. Further, the network element 132 may be communicably coupled to the core network element 134 for switching and routing messages between the user mobile devices of the users 110-124, the CB alert system 136 and other connected networks, for example PSTN or any other service providers. More specifically, when a user (such as the user 110) initiates a call or a message, the core network element 134 is configured to locate a right node controller (in this case the network element 132 shown in FIG. 1) from a plurality of node controllers handled by the core network element 134 by sending paging requests to all or a pre-determined number of node controllers associated with the core network element 134. Examples of the core network element 134 may include, but are not limited to a mobile switching centre (MSC), a serving GPRS support node (SGSN), a short message service centre (SMSC) and the like.

In an embodiment, the core network element 134 is associated with one or more switching functions, such as but not limited to call set-up, release, routing and the like. Additionally, the core network element 134, such as an MSC also performs routing of SMS messages, conference calls, fax, and service billing as well as interfacing with other networks, such as the PSTN.

It should be noted that the wireless communication network 102 may include a variety of other network elements, switches, gateways, routers, repeaters, antennas, etc., for the communication purposes, and herein for the purposes of the present description, only some of the relevant network elements are described. In an implementation, the core network element 134 may be connected to at least one visitor location register (VLR) for storing subscriber record of all user mobile devices that are currently located within the coverage of the network elements 104-108 associated with the core network element 134. Some other non-exhaustive examples of sourcing of subscriber records (*e.g*., location information) include integrating with one or more location sources in the wireless communication network 102. For instance, examples of integrating with the one or more location sources include, but are not limited to, integrating with probes installed on interfaces such as A-Interface, IuCS interface, IuPS interface, S1 interface, Abis interface, IuB interface, and the like; integrating with mobile positioning systems in the wireless communication network 102; and integrating with MSC call data records (CDRs) with location events.

The subscriber record may include information such as details of the subscriptions and/or services associated with the user mobile devices (*e.g.,* cell phones) for example mobile station international subscriber directory number (MSISDN) or telephone number, international mobile subscriber identity (IMSI), location information and the like. Without loss of generality, in an implementation, a home location register (HLR) or a home subscriber server (HSS) may provide information about the subscribers to the VLR. In some scenarios, the core network element 134 may directly communicate with the VLR instead of HLR/HSS for performing handover function to any of node controllers associated with the MSC. Moreover, the VLR may be configured to be updated on a regular basis from the HLR/HSS. The HLR/HSS stores the subscriber record of all the subscribers (or users) associated with the wireless communication network 102 along with details of the MSC servicing the subscribers at that time.

In wireless communication networks, such as the wireless communication network 102, geographic regions are divided into cells where each cell covers a specific geographical area. Each network element is configured to provide network coverage within a cell. Moreover, a cell corresponds to antenna coverage of a network element which transmits and receives radio broadcasts for the wireless communication network 102. As shown in the wireless communication network 102, each network element from among the network elements 104-108 may be configured to facilitate communication to at least one location area (or cell) from among the location areas 126-130. For example, the network element 104 may be configured to facilitate communication to the location area 126 associated with the users 110-114; the network element 106 may be configured to facilitate communication to the location area 128 associated with the users 116-120; and the network element 108 may be configured to facilitate communication to the location area 130 associated with the users 122 and 124. It is understood that, the network elements 104-108 may be configured to be installed or fixedly placed in their respective locations (*e.g.,* the location areas 126-130) as transceivers for communicating with the user mobile devices of the users 110-124 over the one or more communication channels. It is also to be understood that the network elements 104-108, the users 110-124 and the location areas 126-130 may be associated with one or more wireless communication networks such as the wireless communication network 102.

During alert event scenarios such as an emergency event, a business need, a government broadcasting of information, and the like, the Cell Broadcast (CB) alert system 136 associated with a Cell Broadcast Centre (CBC) may send CB alert messages to all the users (subscribers) located in alert areas that is associated with the alert event scenarios. For example, if the location area 126 encounters an emergency event, the CB alert system 136 may send CB alert messages to the users 110-114 on their communication devices. In an example scenario, the CB alert system 136 may send a CB alert message to a large number of subscribers via a CB channel. In such a scenario, the CB alert system 136 may send the CB alert message via radio interface. During such alerts it is very essential to identify how many subscribers have received and read the CB alert message and to additionally identify subscribers who have not received or read the CB alert message. The communication devices of the users 110-114 after receiving the CB alert message sends an acknowledgement message back to the CB alert system 136 using various protocols (*e.g.,* an internet protocol (IP)) and a CB message handling application installed in respective communication devices or in Subscriber Identity Module (SIM) of the communication devices.

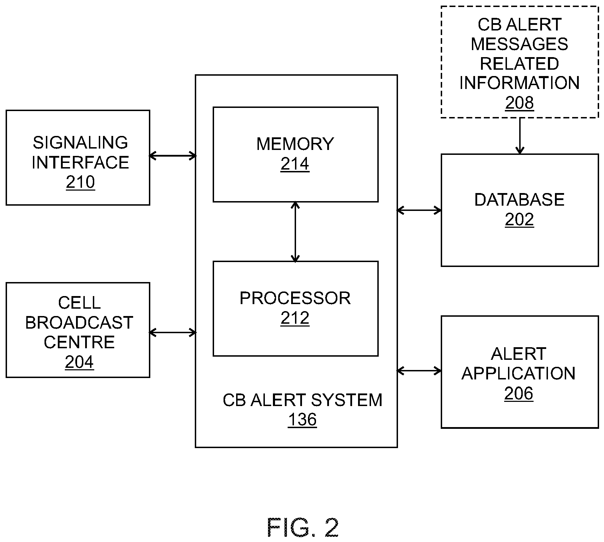

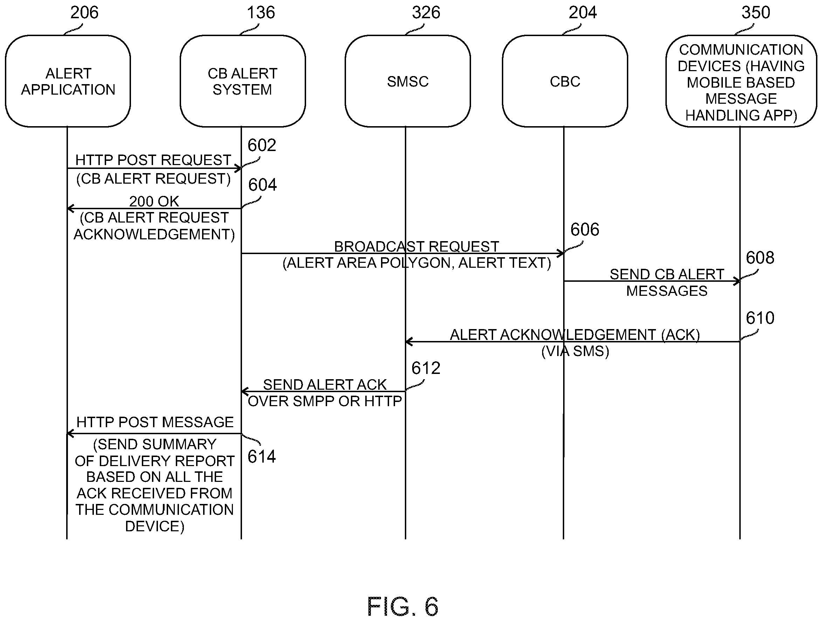

Today, such acknowledgement messages from the subscribers are not received. As a result of receiving the acknowledgement messages, a proper statistics can be prepared by the CB alert system 136 and further actions could be devised for the users of communication devices that have not acknowledged the receipt of the CB message. Various embodiments of the present invention provide systems and methods to manage and handle CB alert messages at a communication device and at the CB alert system end to provide additional benefits. More specifically, systems and methods disclosed herein enable sending of CB alert messages to communication devices during an emergency event in a wireless communication network, thereby receiving acknowledgement from the communication devices in response to receipt of receiving the CB alert messages by the CB message handling application in the communication devices. The CB alert system 136 for managing CB alert messages in a wireless communication network is further explained with reference to FIGS. 2, 3 and 5, and various example embodiments of method of managing and handling CB alert message in the wireless communication network are described with reference to FIGS. 6 to 20.

FIG. 2 illustrates a block diagram of a Cell Broadcast (CB) alert system 136, in accordance with an example embodiment. The CB alert system 136 may be any machine capable of executing a set of instructions (sequential and/or otherwise) so as to manage flow of CB alert messages. The CB alert system 136 is associated with a database 202, a CB Centre 204, an alert application 206, and a signaling interface 208. The CB alert system 136 is communicably coupled with the database 202 for storing CB alert messages and other information associated with the CB alert messages. In an embodiment, the database 202 also stores received acknowledgement messages and its related information. In an embodiment, information and instructions associated with managing the CB alert messages is also stored in the database 202. For example, the database 202 may collate and store data associated with the CB alert messages like, but not limited to, a type of message, an alert area, a number of subscribers, and message preferences for specific subscribers. Similarly, the database 202 can also be used to collate and store data associated with one or more acknowledgement messages received from communication devices of the user.

The CB Centre (CBC) 204 is an entity in a wireless communication network 102 that facilitates in sending CB alert messages, also known as SMS-CB, to subscribers through network entities. The CBC 204 typically receives the CB alert messages from the CB alert system 136 associated with information providers. In an embodiment, the CBC 204 is also capable of modifying the CB alert messages and can also control data such as specified area to which the CB alert message is sent, transmission period for messages and transmission repetition frequency. Thus, after receiving the CB alert messages from the CB alert system 136, the CBC 204 sends these messages to appropriate network entities so as to cascade the messages further to appropriate and target subscribers in the specified or targeted alert area. In an example embodiment, the CBC 204 sends the CB alert messages, received from the CB alert system 136, to applicable Base Station Controllers (BSC) within the wireless communication network 102.

The CB alert system 136 is also shown to include a processor 212 and a memory 214 operatively coupled with each other for handling and managing CB alert messages. It is understood that the CB alert system 136 is depicted to include only one memory and one processor for example purposes and that the CB alert system 136 may include fewer or more components than those depicted in FIG. 2. In the FIG. 2, the CBC 204 and CB alert system 136 are shown as separate entities. In an embodiment, the CB alert system 136 can also be an integral part of the CBC 204 or vice versa.

It should further be noted that the CB alert system 136 may be a distributed or a unified system. In an embodiment, the CB alert system 136 includes at least one memory, for example the memory 214, capable of storing machine executable instructions, and one or more processors capable of executing the stored machine executable instructions for performing tasks such as managing the CB alert messages in the wireless communication network 102. Examples of the memory 214 include, but are not limited to, volatile and/or non-volatile memories. For instance, the memory may be volatile memory (*e.g.,* registers, cache, RAM), non-volatile memory (*e.g.,* ROM, EEPROM, flash memory, etc.), or some combination of the two. The memory 214 stores software, for example, set of instructions that can, for example, implement the technologies described herein, upon execution. For example, the memory 214 may be configured to store information, data, applications, instructions for enabling the CB alert system 136 to carry out various functions in accordance with various example embodiments.

In an embodiment, the one or more processors, for example the processor 212, may be embodied as a multi-core processor, a single core processor, or a combination of one or more multi-core processors and one or more single core processors. For example, the one or more processors may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

In an example embodiment, the CB alert system 136 is configured to send a CB alert message to a plurality of communication devices, for example the communication devices of the users 110-124 as explained with reference to FIG. 1, in an alert area through the CBC 204 in the wireless communication network 102. In an example embodiment, the plurality of communication devices, for example the communication devices of the users 110-124, includes a CB message handling application for receiving and processing such CB alert messages at respective communication devices. In an exemplary scenario, when an alert event or emergency information is received for an alert area, the CB alert system 136 sends a CB alert message to all subscribers associated with the alert area using a Cell Broadcast (CB) channel.

The CB alert system 136 is further associated with the alert application 206. In an embodiment, the alert application 206 is configured to facilitate alert authorities for feeding/creating CB alert messages associated with an alert event in the alert area. In an example embodiment, the alert application 206 may be associated with one or more alert event detection sensors such as sensors for warning about a tsunami or an earthquake and the like. Upon detection of the alert event from the one or more sensors (*e.g*., over an Internet protocol (IP)), the alert application 206 may create the CB alert message (*e.g*., from pre-stored alert messages in the alert server) accordingly. Additionally or optionally, the alert application 206 may also receive input from public warning applications or business applications, so as to create a suitable alert message.

The alert application 206 may be installed or employed in a device having a Graphical User Interface (GUI) to create the alert message (CB alert message), and has communication capabilities to communicate with the device embodying the CB alert system 136. The GUI employed in the alert application 206 may include, but is not limited to, an input interface and/or an output interface. Examples of the input interface may include, but are not limited to, a keyboard, a mouse, a joystick, a keypad, a touch screen, soft keys, a microphone, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like.

In an example scenario, during an alert event such as flash floods, tsunami, tornadoes, severe rain storms, earthquakes and the like, a public alert authority may create a CB alert message so as to be sent to all subscribers associated with one or more alert areas corresponding to the alert event. Each alert area indicates the geographical area where the intended CB alert message needs to be disseminated. The alert area may be as small as coverage area of a single cell site (such as a cell coverage corresponding to each network element (*e.g.,* BTS, NodeB, eNodeB, Home NodeB or femtocell site)) to as large as the complete wireless communication network. In an embodiment, the authority may create and send the CB alert messages to the subscribers using an application installed in mobile devices associated with the subscribers. For example, during an alert event, an authority managing control of the alert event may send CB alert messages to the users using an application (such as a mobile application or other native applications). In an example embodiment, the authority may send the created CB alert message via any suitable application to the alert application 206 using an internet protocol or any other transport layer protocols.

In an embodiment, the CB alert system 136 is configured to receive the alert message (a CB alert message) from the alert application 206 to be sent to a plurality of communication devices (say communication devices of the users 110-124 as explained with reference to FIG. 1) corresponding to the alert area using the CB alert system 136. Moreover, each alert message includes alert information for warning the plurality of users of the corresponding alert area of the alert event. For example, if the alert event corresponds to an earthquake for an alert area, then alert information may be of form "This is an emergency alert: A major earthquake has occurred in this area. Please move to an open area if you can safely do so. Avoid buildings, power lines, trees, and other hazards. Assume all power lines are live. Listen for and be prepared to follow further instructions." Accordingly, a CB alert message may be created based on the alert information and sent to the users in the earthquake affected alert area. In another example, in case of a business alert message, alert information may be of the form "XYZ company is aware of the new business event that is scheduled to impact offices today. We will continue to monitor the situation and reach out to the appropriate managers as needed. Please check with your immediate supervisor for additional response information, and call +1 XXX-XXX-XXXX (where X denotes an integral number between 0 and 9) or check back for updates." Accordingly, a business alert message may be created based on the alert information and sent to the appropriate employees in their respective offices.

In an embodiment, the CB alert system 136 is configured to receive one or more acknowledgement messages from one or more communication devices. The acknowledgement message is received in response to the receipt of the CB alert message at the plurality of communication devices, for example, the communication device associated with the users 110-124 as explained with reference to FIG. 1. In the embodiment, the one or more acknowledgement messages are received by CB message handling application in respective communication devices. Various examples of managing CB alert messages, including sending the CB alert messages through a variety of network elements of a wireless communication network and receiving the acknowledgement messages through various communication channels are further described with reference to FIGS. 6 to 20.

In an embodiment, the CB alert system 136 is configured to send the CB alert messages associated with the alert area via one or more signaling interfaces, for example, the signaling interface 210. The signaling interface 210 is configured to send messages (such as the CB alert messages) to the one or more network elements associated within the wireless communication network 102. In an embodiment, the CB alert message is sent to the CBC 204 which interacts with the signaling interface 210 to send messages to the one or more network elements associated with the wireless communication network 102. Additionally, the signaling interface 210 is also configured to receive acknowledgement messages from the one or more communication devices via the network elements. The signaling interface 210 is an interface between the CB alert system 136 and the network element 132, for example the BSC, the RNC, or the MME. In an embodiment, the signaling interface 210 is associated with a transport layer with communication standards like IP or X.25.

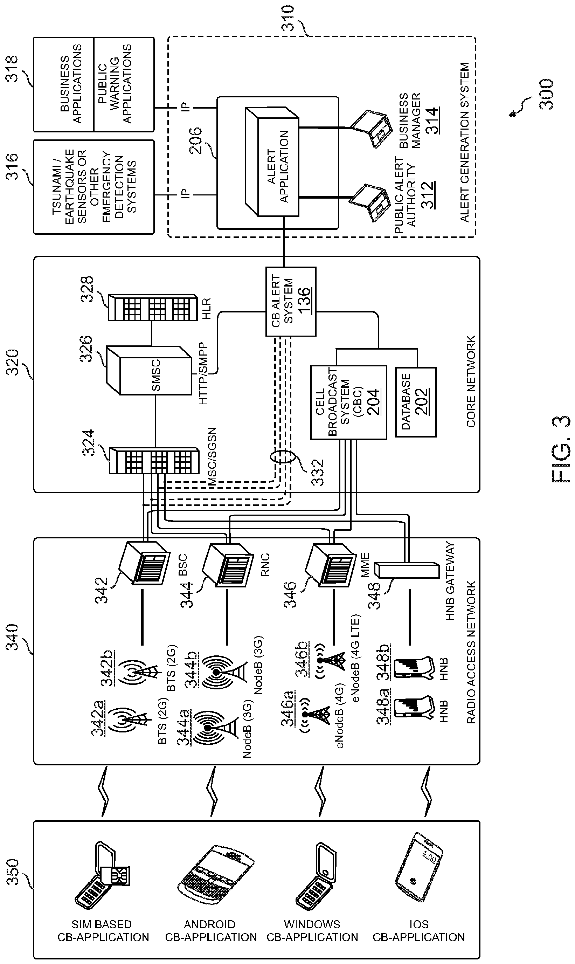

FIG. 3 shows a schematic block diagram 300 of an exemplary CB wireless communication system, in accordance with an example embodiment. The schematic block diagram 300 includes an alert generation system 310 including the alert application 206 configured to create suitable CB alert messages that are sent to a plurality of users associated with an alert area during an alert event. The alert area is the geographical area corresponding to geo-coordinates of an area identified for a CB alert message. In an example scenario, a public alert authority (*see* 312) may be configured to create CB alert message using the alert application 206 on an alert area (such as location areas 126-130 as explained with reference to FIG. 1). In another scenario, a business manager associated with a business team (*see* 314) may create a CB alert message using the alert application 206 based on a location area information. In yet another scenario, the alert application 206 may be associated with one or more sensors related to emergency detection systems (*see* 316) such as sensors for warning about a tsunami or an earthquake and the like. Upon detection of an emergency event from the one or more sensors (for example, over an Internet protocol (IP)), the alert application 206 may create a CB alert message (for example, from pre-stored alert messages in the alert generation system 310) accordingly. The alert application 206 may also receive input from business applications or public warning applications (*see* 318), like civil protection and defense and create CB alert messages based on the location information.

In an embodiment, the alert generation system 310 upon creating the CB alert message (*e.g*., an SMS) using the alert application 206 is configured to send the CB alert message to a core network 320. The core network 320 includes the CB alert system 136. In an embodiment, the CB alert system 136 is configured to communicate with the database 202 and the CBC 204 as explained with reference to FIG. 2. The database 202 is configured to store the CB alert messages and other information associated with the CB alert messages. In an embodiment, the database 202 also stores received acknowledgement messages and its related information. In an embodiment, information and instructions associated with managing CB alert messages is also stored in the database 202. In an example, the database 202 may collate and store data associated with the CB alert messages like, but are not limited to, a type of message, an alert area, a number of subscribers, and message preferences for specific subscribers. Similarly, the database 202 can also be used to collate and store data associated with one or more acknowledgement messages received from communication devices of the user.

In an example embodiment, the CB alert system 136 is configured to receive the CB alert acknowledgement messages from an MSC/SGSN 324 (hereinafter also individually referred as MSC 324 or SGSN 324) via a messaging centre such as a short message service centre (SMSC) (*see* 326). As shown in FIG. 3, the SMSC 326 is also shown to be connected to the HLR 328.

The SMSC 326 connectivity towards the CB alert system 136 is to receive the CB alert acknowledgement messages from users of one or more communication devices in the mobile network 350, also called as mobile subscribers. In an embodiment, location information of the communication devices is received from mobile or SIM applications installed on the communication devices via Hyper Text Transfer Protocol (HTTP) or Short Message Service (SMS) interfaces.

In an embodiment, the CBC 204 is shown to be connected to network elements such as BSC 342, RNC 344, MME 346 and HNB gateway 348 (also known as a 3G femtocell or Small Cell) for sending CB alert messages to these network elements. It should be understood that the CBC 204 is shown to have associated with four network elements as node controllers (342-348) for example purpose only, and that the CBC 204 may be associated with fewer or more number of node controllers than those depicted in FIG. 3. In an embodiment, the CBC 204 is connected with the network elements using protocol such as X.25 or Internet Protocol (IP). In another embodiment, the CB alert system 136 is also connected with the network elements such as BSC 342, RNC 344, and MME 346. In an embodiment, the MSC 324 is connected to network elements such as BSC 342, RNC 344 and MME 346 using an IP interface. In an embodiment, location information of the users of the one or more communication devices in the mobile network 350 is fetched using the said interface.

In an embodiment, each of the network elements 342-348 may be associated with one or more network elements such as corresponding base stations depending upon cellular technologies. For example, the BSC 342 is depicted to be associated with 2G based network elements BTS 342a and BTS 342b; the RNC 344 is depicted to be associated with 3G based network elements NodeB 344a and NodeB 344b; the MME 346 is depicted to be associated with 4G based network elements eNodeB 346a and eNodeB 346b; and the HNB gateway 348 is depicted to be associated with 3G based network elements HNB 348a and HNB 348b, as shown in the radio access network 340 respectively.

Thus, the CB alert system 136 sends the CB alert messages created by the alert generation system 310 to a plurality of communication devices that are associated with the radio access network 340. In an embodiment, a CB alert message is sent to the CBC 204 that sends the CB alert message to the Radio access network 340 using GSM 3.41 over IP/X 25 protocol. The CB alert message is then relayed to the plurality of communication devices in a mobile network 350 that is associated with the radio access network 340. Thereafter, acknowledgement messages is then received from the one or more communication devices in the mobile network 350 using a CB message handling application associated with each communication device. The acknowledgment messages are accumulated at the CB alert system 136 for analysis and to take further predefined actions.

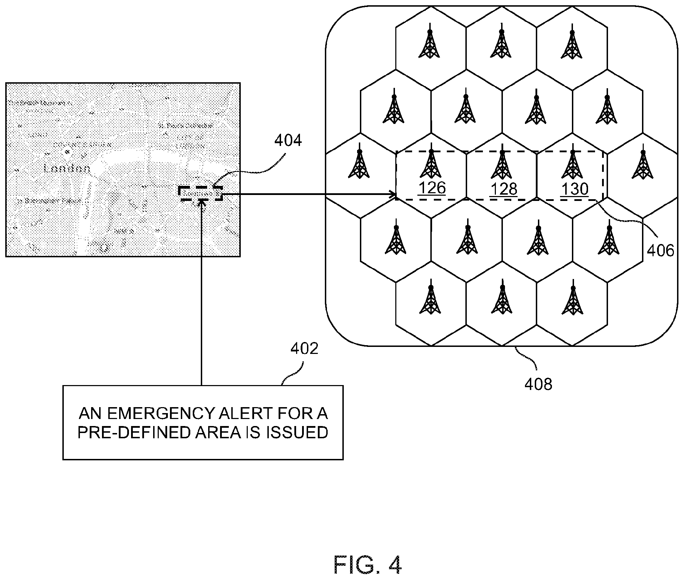

FIG. 4 illustrates an exemplary depiction and method of defining an alert area in accordance with an example embodiment. At step 402, an emergency alert for a predefined area is issued or created. In an embodiment, alert authorities are provided with an option to create or feed the alert information associated with an alert event through the alert application 206. In an embodiment, the alert application 206 is installed or employed in a device having a Graphical User Interface (GUI) to create the alert message (CB alert message), and has communication capabilities to communicate with the device embodying the CB alert system 136.

In an embodiment, the predefined area (the alert area) is marked in a map associated with the alert application 206 (*see* 404). Thereafter, the geo-coordinates associated with the marked area in the map are determined. In an embodiment, the alert area is explicitly entered using the geographical location name. For the purpose of this explanation, a part of London city map is shown in FIG. 4 and an alert area associated with the alert event is marked on the map, for example 'Southwark'. Hence, the method based on these input, identifies the geo-coordinates associated with the marked area on the map. In an embodiment, the area can be sub area of a larger cell coverage area. For example, a user can select a specific area of the 'Southwark' in the above example. In another embodiment, the alert area is defined in accordance with ZIP codes, area name and the like.

At 406, the method identifies specific cell site associated with the alert area using the identified geo-coordinates. The cell sites 408 represent example geographically contiguous cell sites capable of providing wireless communication coverage to the defined alert area and surrounding areas. The shaded cell sites in the cell site 408 represent cell sites found associated with the defined alert area (*i.e.* Southwark). In an example, the shaded cell site (alert area) is the location area covered by the location areas (or cells) 126, 128 and 130. The CB alert message can then be sent to subscribers of the location areas 126, 128 and 130. For example, the method sends the CB alert message to the users 110-124 associated with the location areas 126, 128 and 130.

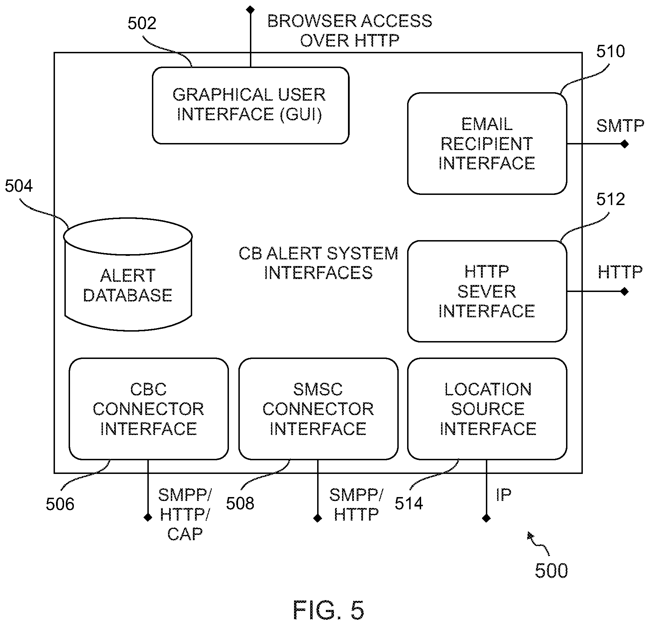

FIG. 5 illustrates a block diagram 500 depicting interfaces associated with the CB alert system 136 in accordance with an embodiment. The interfaces enable the CB alert system 136 to seamlessly interact with other components using one or more protocols and manage CB alert messages delivery and acknowledgement messages based on receipt of the CB alert messages. A Graphical User Interface (GUI) 502 enables alert application and GUI associated with the CB alert system 136 to interact with the CB alert system 136 using Hyper Text Transfer Protocol (HTTP). The alert application and GUI associated with the CB alert system 136 is used to create CB alert messages. For example, the alert application 206 may send a CB alert message to the CB alert system 136 through the GUI interface 502 by using browser over Hyper Text Transfer Protocol (HTTP). In an embodiment, the CB alert message related information is stored in an alert database 504. In an embodiment, the alert database 504 is same as the database 202 defined in conjunction with the FIG. 2. The CB alert system 136 after receiving a request to send the alert messages to subscribers in an alert area, submits the request to a Cell Broadcast Centre (CBC), for example the CBC 204 to cascade the CB alert messages to network entities and thereafter to subscribers. The CB alert system 136 interacts with the CBC 204 using a CBC Connector Interface 506. The CBC 204 then identifies all cell sites covering the alert area to which the CB alert messages is sent and then relays the CB message to all the identified cell cites via different communication channels and protocols.

The CB alert messages are then delivered to all communication devices associated with the identified cell sites. In an embodiment, each of the communication devices includes a CB alert application that enables the each communication device to receive the CB alert messages and initiate acknowledgement back to the CB alert system 136. The acknowledgement is sent back using a Short Message Service (SMS), an Electronic Mail (E-mail) or a HTTP post request. Hence, to handle these acknowledgement messages, the CB alert system 136 is associated with an Email recipient interface 510, an HTTP server interface 512, and a short message service centre (SMSC) connector interface 508.

The Email recipient interface 510 uses a Simple Mail Transfer Protocol (SMTP) to handle receipt of E-mail acknowledgement messages. Similarly, the HTTP server interface 512 uses HTTP to handle receipt of HTTP post acknowledgement messages and request. The SMSC connector interface 508 allows the CB alert system 136 to interact with an SMSC (such as the SMSC 326 explained with reference to FIG. 3) and is used to handle SMS messages received and sent by the CB alert system 136. In an embodiment, the acknowledgement messages received using various methods can then be stored and analyzed in the alert database 504 of the CB alert system 136.

In an embodiment, the block diagram 500 also includes a location source interface 514 which uses Internet Protocol interface to fetch location of users of the one or more communication devices in the mobile network 350. In an embodiment, the location source interface 514 receives location events from A/Gb/IuCS/IuPS/S1 interfaces. In an embodiment, the location events are messages that carry mobile number, MSISDN, IMSI or MSRN along with location information such as Cell ID, SMS, USSD call, packet call and the like. In an embodiment, the location source can be passive probes in at least one of network elements such as MSC 324, logs in the SGSN or in the CDRs which carry location information of the users of the communication devices, for example the subscribers.

FIG. 6 illustrates a sequence flow diagram for managing acknowledgement messages, in accordance with an embodiment of an example embodiment.

In the embodiment, a CB alert message is created using the alert application 206 for an alert area. The CB alert message is created at the alert application 206 that is external to the CB alert system 136. The alert application 206 may be associated with a public warning application or a business application (*see* 318 in FIG. 3). In an embodiment, the alert area is selected on a map and the geo-coordinates of the alert area are identified based on the selection on the map (*see* 404 in FIG. 4). At step 602, the alert application 206 sends a CB alert request to the CB alert system 136. In an embodiment, the alert request is a Hyper Text transfer Protocol (HTTP) Post request. At step 604, the CB alert system 136 sends an acknowledgement to the alert application 206 on receiving the CB alert request. The acknowledgement is a 200 OK response to the HTTP request. In an embodiment, the CB alert system 136 stores the received CB alert request and any additional information associated with the CB alert request in a database, for example the database 202. At step 606, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries geo-coordinates of the alert area, Cell Broadcast Channel, unique alert ID and the CB alert message. In an embodiment, the CB alert system 136 packs a first four bytes of the CB alert message as the unique alert ID for this message.

At step 608, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices in the alert area via the cell sites. For example, sending the CB alert messages to all communication devices in a mobile network such as the mobile network 350 as explained with reference to FIG. 3. In an embodiment, the communication devices in the mobile network 350 include a mobile based message handling app to manage the CB alert messages.

At step 610, the communication devices in the mobile network 350 receive the CB alert message on a configured broadcast channel using the mobile based message handling app. The mobile based message handling app then sends an alert acknowledgement via a Short Message Service (SMS) to the Short Message Service Centre (SMSC) 326. The alert acknowledgement may include a unique alert identity, time at which the CB alert message was received at the communication device, channel on which the CB alert message was received, location of the communication device and the like. The SMS associated with the alert acknowledgement is destined to a number, which is used to identify the CB alert system 136 on the SMSC 326. At step 612, the SMSC 326 routes the alert acknowledgement messages to the CB alert system 136 over Short Message Peer-to-Peer (SMPP) or Hyper Text Transfer Protocol (HTTP) interface. The CB alert system 136 receives the acknowledgement message using the SMSC connector interface 508 as explained with reference to FIG. 5. The CB alert system 136 compiles all the acknowledgement messages received from the communication devices and prepares an alert reach summary or delivery report for the corresponding alert event. At step 614, the summary of the delivery report is communicated to the alert application 206 via HTTP POST.

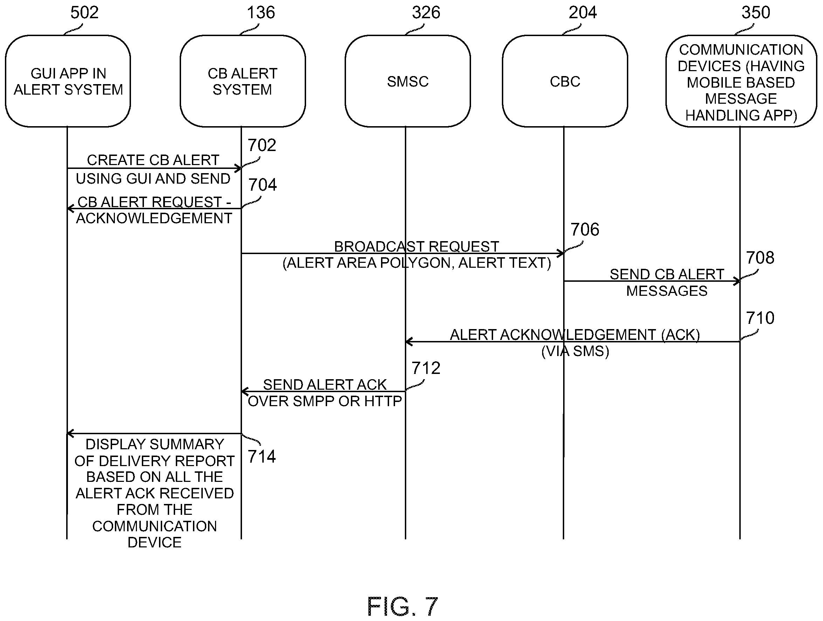

FIG. 7 shows a sequence flow diagram for managing acknowledgement messages, in accordance with another example embodiment of the present invention.

In the example embodiment, a CB alert message is created using a Graphical User Interface (GUI) 502 associated with the CB alert system 136. In the embodiment, the GUI 502 is an internal GUI of the CB alert system 136. In an alternate embodiment, the GUI 502 may be installed or employed in a device to create the CB alert message, and may have communication capabilities to communicate with the device embodying the CB alert system 136. The GUI employed may include, but is not limited to, an input interface and/or an output interface. In an embodiment, the alert area is selected on a map and the geo-coordinates of the alert area are identified (*see* 404). At step 702, the GUI 502 sends a CB alert request to the CB alert system 136. In an embodiment, the alert request is a Hyper Text transfer Protocol (HTTP) Post request. At step 704, the CB alert system 136 sends an acknowledgement to the GUI 502 on receiving the alert request. The acknowledgement is a 200 OK response to the HTTP request. In an embodiment, the CB alert system 136 stores the received CB alert request and any additional information associated with the CB alert request in a database, for example the database 202. At step 706, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carriesgeo-coordinates of the alert area, Cell Broadcast Channel and the CB alert message. In an embodiment, the CB alert system 136 packs a first four bytes of the CB alert message as the unique alert ID for this message.

At step 708, the CBC 204 identifies the cell sites, for example BTS, NodeB, eNodeB, Home NodeB Gateways, under the alert area and packs the CB alert message in GSM3.41 format. The CBC 204 then interfaces with various network entities like Base Station Controllers (BSCs), Radio Network Controller (RNCs) and/or Mobility Management Entity (MMEs) and relays the CB alert message to all communication devices, for example communication devices in a mobile network such as the mobile network 350 explained with reference to FIG. 3. In an embodiment, the communication devices in the mobile network 350 include a mobile based message handling app to manage the CB alert messages.

At step 710, the communication devices in the mobile network 350 receive the CB alert message on a configured broadcast channel using the mobile based message handling app. The mobile based message handling app then sends an alert acknowledgement via a Short Message Service (SMS) to the Short Message Service Centre (SMSC) 326. The alert acknowledgement may include a unique alert identity, time at which the CB alert message was received at the communication device, channel on which the CB alert message was received, location of the communication device. The SMS associated with the alert acknowledgement is destined to a number, which is used to identify the CB alert system 136 on the SMSC 326. At step 712, the SMSC 326 routes the alert acknowledgement to the CB alert system 136 over SMPP or HTTP interface. The CB alert system 136 receives the acknowledgement message using the SMSC connector interface 508. The CB alert system 136 compiles a count of all the acknowledgement messages received from the communication devices and prepares an alert reach summary or delivery report for the corresponding alert event. At step 714, the alert reach statistics are displayed on the CB alert GUI 502.

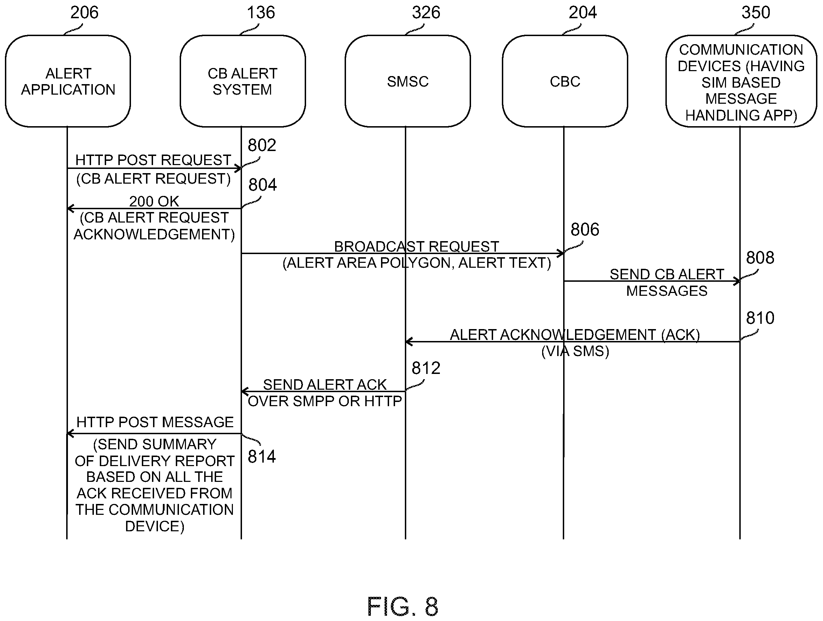

FIG. 8 illustrates a sequence flow diagram for managing acknowledgement messages, in accordance with another example embodiment.

In the example embodiment, a CB alert message is created using the alert application 206 for an alert area. The alert application 206 may be associated with a public warning application or a business application (*see* 318). In an embodiment, the alert area is selected on a map and the geo-coordinates of the alert area are identified based on the selection on the map (*see* 404). At step 802, the alert application 206 sends a CB alert request to the CB alert system 136. In an embodiment, the alert request is a Hyper Text transfer Protocol (HTTP) Post request. At step 804, the CB alert system 136 sends an acknowledgement message to the alert application 206 on receiving the alert request. The acknowledgement is a 200 OK response to the HTTP request. In an embodiment, the CB alert system 136 stores the received CB alert request and any additional information associated with the CB alert request in a database, for example the database 202. At step 806, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries geo-coordinates of the alert area, Cell Broadcast Channel and the CB alert message. In an embodiment, the CB alert system 136 packs a first four bytes of the CB alert message as the unique alert ID for this message.

At step 808, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices, say set of communication devices in a mobile network such as the mobile network 350. In an embodiment, the communication devices in the mobile network 350 include a mobile based message handling app to manage the CB alert messages.

At step 810, the communication devices in the mobile network 350 receive the CB alert message on a configured broadcast channel using a Subscriber Identification Module (SIM) based message handling app. The SIM based message handling then sends an alert acknowledgement via a Short Message Service (SMS) to the Short Message Service Centre (SMSC) 326. The alert acknowledgement may include a unique alert Identity, time at which the CB alert message was received at the communication device, channel on which the CB alert message was received, location of the communication device. The SMS associated with the alert acknowledgement is destined to a number, which is used to identify the CB alert system 136 on the SMSC 326. At step 812, the SMSC 326 routes the alert acknowledgement to the CB alert system 136 over SMPP or HTTP interface. The CB alert system 136 receives the acknowledgement message using the SMSC connector interface 508. The CB alert system 136 compiles all the acknowledgement messages received from the communication devices and prepares an alert reach summary or delivery report for the corresponding alert event. At step 814, the summary of the delivery report is communicated to the alert application 206 via HTTP POST.

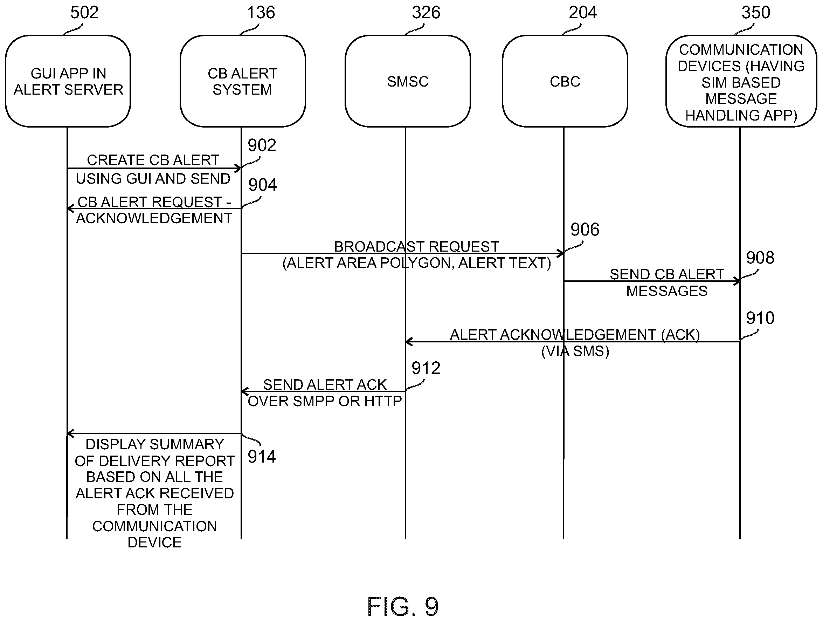

FIG. 9 illustrates a sequence flow diagram for managing acknowledgement messages, in accordance with another example embodiment.

In the example embodiment, a CB alert message is created using a Graphical User Interface (GUI) 502 associated with the CB alert system 136. In the embodiment, the GUI 502 is an internal GUI of the CB alert system 136. In an alternate embodiment, the GUI 502 may be installed or employed in a device to create the CB alert message, and may have communication capabilities to communicate with the device embodying the CB alert system 136. The GUI employed may include, but is not limited to, an input interface and/or an output interface. In an embodiment, the alert area is selected on a map and the geo-coordinates of the alert area are identified (*see* 404). At step 902, the GUI 502 sends a CB alert request to the CB alert system 136. In an embodiment, the alert request is a Hyper Text transfer Protocol (HTTP) Post request. At step 904, the CB alert system 136 sends an acknowledgement to the GUI 502 on receiving the alert request. The acknowledgement is a 200 OK response to the HTTP request. In an embodiment, the CB alert system 136 stores the received CB alert request and any additional information associated with the CB alert request in a database, for example the database 202. At step 906, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 908, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices, say set of communication devices in a mobile network 350. In an embodiment, the communication devices in the mobile network 350 include a mobile based message handling app to manage CB alert messages.

At step 910, the communication devices in the mobile network 350 receive the CB alert message on a configured broadcast channel using a Subscriber Identification Module (SIM) based message handling app. The SIM based message handling then sends an alert acknowledgement via a Short Message Service (SMS) to the Short Message Service Centre (SMSC) 326. The alert acknowledgement may include a unique alert Identity, time at which the CB alert message was received at the communication device, channel on which the CB alert message was received, location of the communication device and the like. The SMS associated with the alert acknowledgement is destined to a number, which is used to identify the CB alert system 136 on the SMSC 326. At step 912, the SMSC 326 routes the alert acknowledgement to the CB alert system 136 over SMPP or HTTP interface. The CB alert system 136 receives the acknowledgement message using the SMSC connector interface 508. The CB alert system 136 compiles all the acknowledgement messages received from the communication devices and prepares an alert reach summary or delivery report for the corresponding alert event. At step 914, the alert reach statistics are displayed on the CB alert GUI 502.

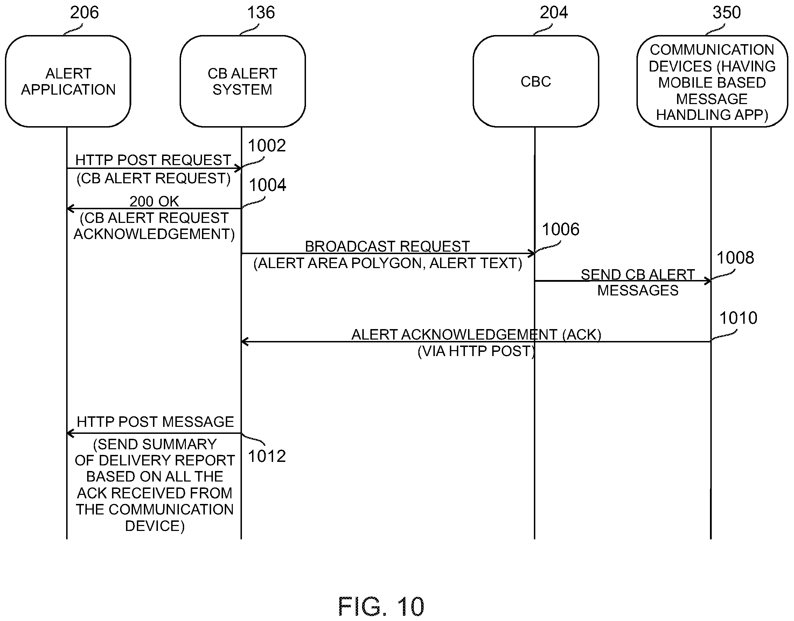

FIG. 10 illustrates a sequence flow diagram for managing acknowledgement messages, in accordance with another example embodiment.

In the example embodiment, a CB alert message is created using the alert application 206 for an alert area. The alert application 206 may be associated with a public warning application or a business application (*see* 318). In an embodiment, the alert area is selected on a map and the geo-coordinates of the alert area are identified based on the selection on the map (*see* 404). At step 1002, the alert application 206 sends a CB alert request to the CB alert system 136. In an embodiment, the alert request is a Hyper Text transfer Protocol (HTTP) Post request. At step 1004, the CB alert system 136 sends an acknowledgement to the alert application 206 on receiving the alert request. The acknowledgement is a 200 OK response to the HTTP request. In an embodiment, the CB alert system 136 stores the received CB alert request and any additional information associated with the CB alert request in a database, for example the database 202. At step 1006, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1008, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the alert message is sent to the communication devices in the mobile network 350. In an embodiment, the communication devices in the mobile network 350 include a mobile based message handling app to manage CB alert messages.

At step 1010, the communication devices in the mobile network 350 receive the CB alert message on a configured broadcast channel using the mobile based message handling app. The mobile based message handling app then sends an alert acknowledgement via HTTP Post to the CB alert system 136 using an Internet Protocol address and Port number. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1012, the summary of the delivery report is communicated to the alert application 206 via HTTP POST.

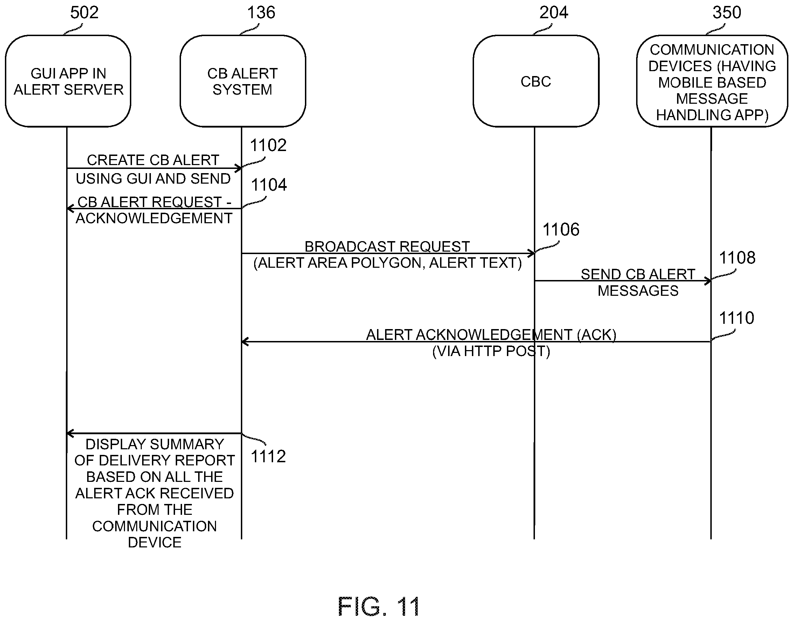

FIG. 11 illustrates a sequence flow diagram for managing acknowledgement messages, in accordance with another example embodiment.

In another embodiment, a CB alert message is created using the GUI 502 associated with the CB alert system 136. In an embodiment, the alert area is selected on a map and the geo-coordinates of the alert area are identified based on the selection on the map (*see* 404). At step 1102, the GUI 502 sends a CB alert request to the CB alert system 136. In an embodiment, the alert request is a Hyper Text transfer Protocol (HTTP) Post request. At step 1104, the CB alert system 136 sends an acknowledgement to the GUI 502 on receiving the alert request. The acknowledgement is a 200 OK response to the HTTP request. In an embodiment, the CB alert system 136 stores the received CB alert request and any additional information associated with the CB alert request in a database, for example the database 202. At step 1106, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1108, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1110, the communication devices in the mobile network 350 receive the CB alert message on a configured broadcast channel using the mobile based message handling app. The mobile based message handling app then sends an alert acknowledgement via HTTP Post to the CB alert system 136 using an Internet Protocol address and Port number. The alert acknowledgement may include a unique alert Identity, time at which the CB alert message was received at the communication device, channel on which the alert message was received, location of the communication device and the like. The CB alert system 136 compiles all the acknowledgement messages received from the communication devices and prepares an alert reach summary or delivery report for the corresponding alert event. At step 1112, the alert reach statistics are displayed on the CB alert GUI 502.

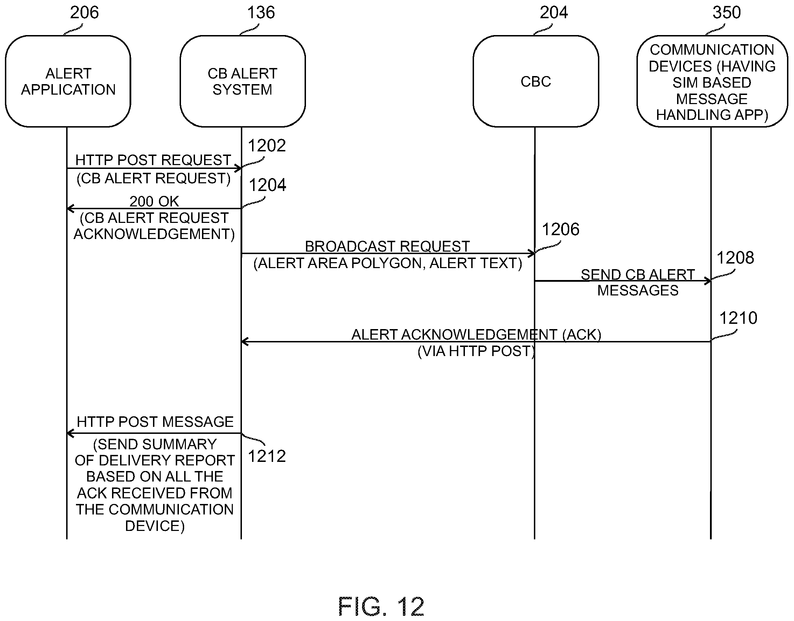

FIG. 12 illustrates a sequence flow diagram for managing acknowledgement messages, in accordance with another example embodiment.

In the embodiment, a CB alert message is created using the alert application 206 for an alert area. The alert application 206 may be associated with a public warning application or a business application (*see 318*). In an embodiment, the alert area is selected on a map and the geo-coordinates of the alert area are identified based on the selection on the map (*see 404*). At step 1202, the alert application 206 sends a CB alert request to the CB alert system 136. In an embodiment, the alert request is a Hyper Text transfer Protocol (HTTP) Post request. At step 1204, the CB alert system 136 sends an acknowledgement to the alert application 206 on receiving the alert request. The acknowledgement is a 200 OK response to the HTTP request. In an embodiment, the CB alert system 136 stores the received CB alert request and any additional information associated with the CB alert request in a database, for example the database 202. At step 1206, the CB alert system 136 sends the CB alert request (as broadcast request) to the Cell Broadcast Centre (CBC) 204 using Hyper Text Transfer Protocol (HTTP), Short Message Peer-to-Peer (SMPP) and/or CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1208, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1210, the communication devices in the mobile network 350 receive the CB alert message on a configured broadcast channel using the Subscriber Identification Module (SIM) based message handling app. The mobile based message handling app then sends an alert acknowledgement via HTTP Post to the CB alert system 136 using an Internet Protocol address and Port number. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1212, the summary of the delivery report is communicated to the alert application 206 via HTTP POST.

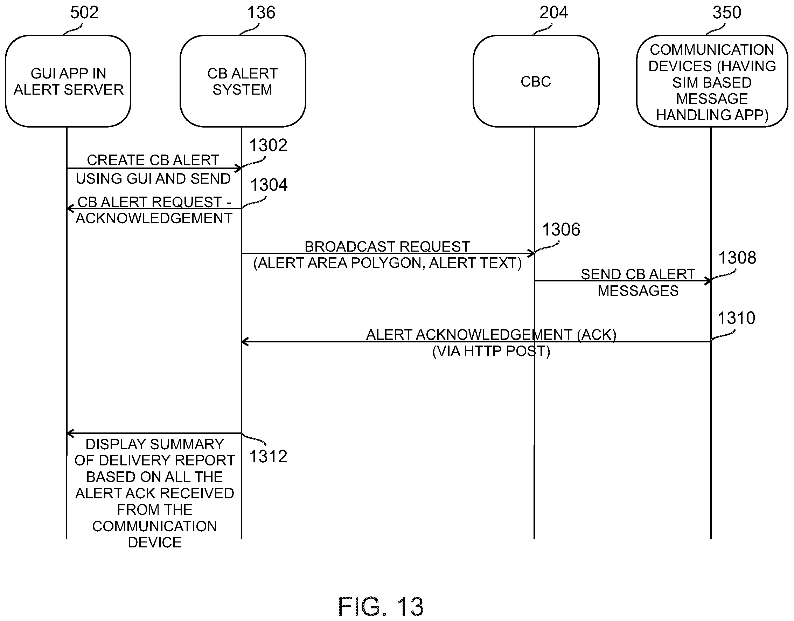

FIG. 13 illustrates a sequence flow diagram for managing acknowledgement messages, in accordance with another example embodiment.

In the embodiment, a CB alert message is created using the GUI 502 associated with the CB alert system 136. In an embodiment, the alert area is selected on a map and the geo-coordinates of the alert area are identified based on the selection on the map (*see 404*). At step 1302, the GUI 502 sends a CB alert request to the CB alert system 136. In an embodiment, the alert request is a Hyper Text transfer Protocol (HTTP) Post request. At step 1304, the CB alert system 136 sends an acknowledgement to the GUI 502, on receiving the alert request. The acknowledgement is a 200 OK response to the HTTP request. In an embodiment, the CB alert system 136 stores the received CB alert request and any additional information associated with the CB alert request in a database, for example the database 202. At step 1306, the CB alert system 136 sends the CB alert request (as broadcast request) to the Cell Broadcast Centre (CBC) 204 using Hyper Text Transfer Protocol (HTTP), Short Message Peer-to-Peer (SMPP) and/or CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1308, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1310, the communication devices in the mobile network 350 receive the CB alert message on a configured broadcast channel using the Subscriber Identification Module (SIM) based message handling app. The SIM based message handling then sends an alert acknowledgement via HTTP Post to the CB alert system 136 using an Internet Protocol address and Port number. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1312, the summary of the delivery report is communicated to the GUI 502 via HTTP POST.

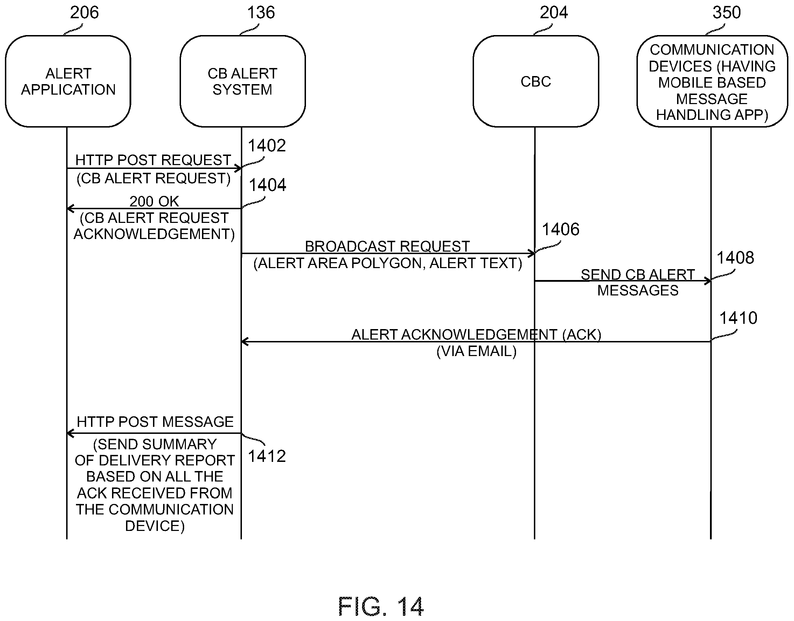

FIG. 14 illustrates a sequence flow diagram for managing acknowledgement messages, in accordance with another example embodiment.

In the embodiment, a CB alert message is created using the alert application 206 for an alert area. The alert application 206 may be associated with a public warning application or a business application (*see 318*)*.* In an embodiment, the alert area is selected on a map and the geo-coordinates of the alert area are identified based on the selection on the map (*see 404*). At step 1402, the alert application 206 sends a CB alert request to the CB alert system 136. In an embodiment, the alert request is a Hyper Text transfer Protocol (HTTP) Post request. At step 1404, the CB alert system 136 sends an acknowledgement to the alert application 206 on receiving the alert request. The acknowledgement is a 200 OK response to the HTTP request. In an embodiment, the CB alert system 136 stores the received CB alert request and any additional information associated with the CB alert request in a database, for example the database 202. At step 1406, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1408, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1410, the communication devices in the mobile network 350 receive the CB alert message on a configured broadcast channel using the mobile based message handling app. The mobile based message handling app sends an acknowledgement via E-mail to the configured UMS Alert Server E-mail address. UMS Alert Server has the capability to receive the E-mails. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1412, the summary of the delivery report is communicated to the alert application 206 via HTTP POST.

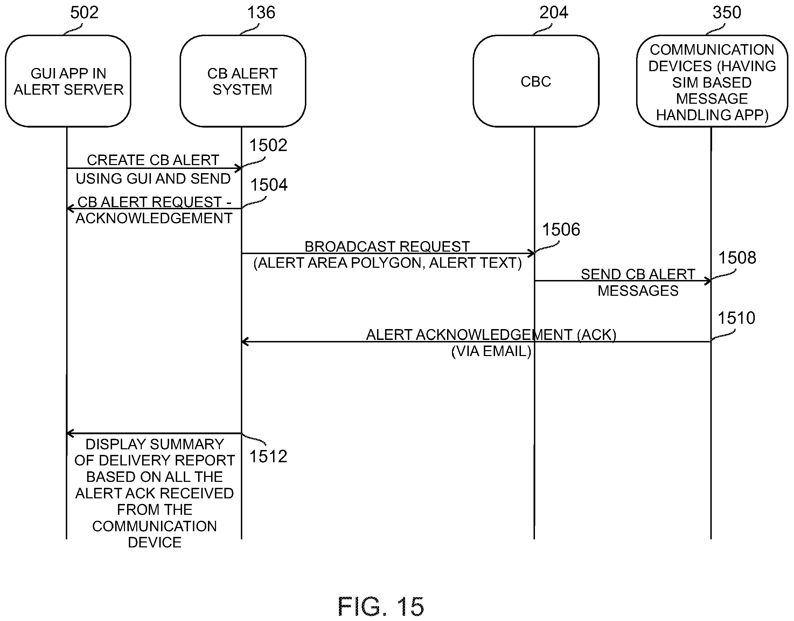

FIG. 15 illustrates a sequence flow diagram for managing acknowledgement messages, in accordance with another example embodiment.

In the embodiment, CB alert message is created using the GUI 502 associated with the CB alert system 136. In an embodiment, the alert area is selected on a map and the geo-coordinates of the alert area are identified based on the selection on the map (*see 404*). At step 1502, the GUI 502 sends a CB alert request to the CB alert system 136. In an embodiment, the alert request is a Hyper Text transfer Protocol (HTTP) Post request. At step 1504, the CB alert system 136 sends an acknowledgement to the GUI 502, on receiving the alert request. The acknowledgement is a 200 OK response to the HTTP request. In an embodiment, the CB alert system 136 stores the received CB alert request and any additional information associated with the CB alert request in a database, for example the database 202. At step 1506, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1508, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1510, the communication devices in the mobile network 350 receive the CB alert message on a configured broadcast channel using the mobile based message handling app. The mobile based message handling app sends an acknowledgement via E-mail to the configured UMS Alert Server E-mail address. UMS Alert Server has the capability to receive the E-mails. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1512, the summary of the delivery report is communicated to the GUI 502 via HTTP POST.

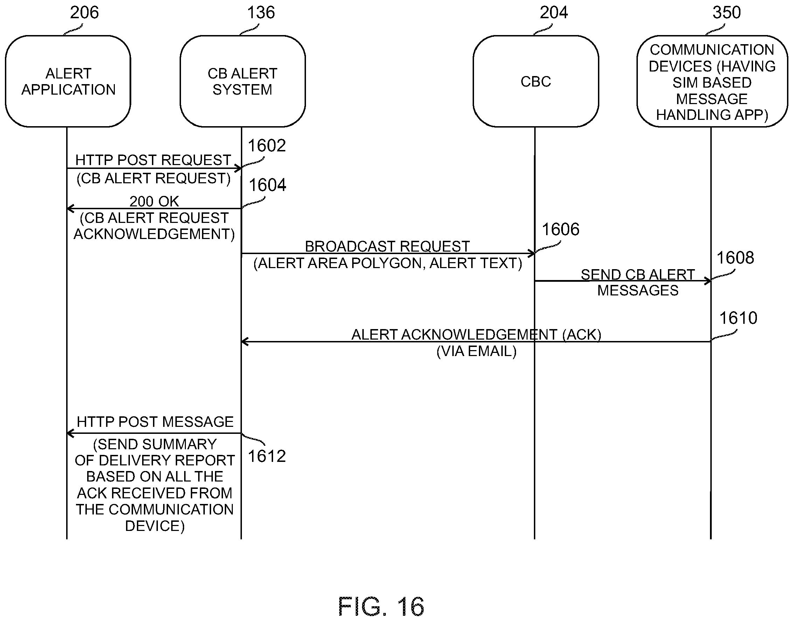

FIG. 16 illustrates a sequence flow diagram for managing acknowledgement messages, in accordance with another example embodiment.

In the embodiment, a CB alert message is created using the alert application 206 for an alert area. The alert application 206 may be associated with a public warning application or a business application (*see 318*)*.* In an embodiment, the alert area is selected on a map and the geo-coordinates of the alert area are identified based on the selection on the map (*see 404*). At step 1602, the alert application 206 sends a CB alert request to the CB alert system 136. In an embodiment, the alert request is a Hyper Text transfer Protocol (HTTP) Post request. At step 1604, the CB alert system 136 sends an acknowledgement to the alert application 206 on receiving the alert request. The acknowledgement is a 200 OK response to the HTTP request. In an embodiment, the CB alert system 136 stores the received CB alert request and any additional information associated with the CB alert request in a database, for example the database 202. At step 1606, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1608, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1610, the communication devices in the mobile network 350 receive the CB alert message on a configured broadcast channel using the Subscriber Identification Module (SIM) based message handling app. The mobile based message handling app sends an acknowledgement via E-mail to the configured UMS Alert Server E-mail address. UMS Alert Server has the capability to receive the E-mails. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1612, the summary of the delivery report is communicated to the alert application 206 via HTTP POST.

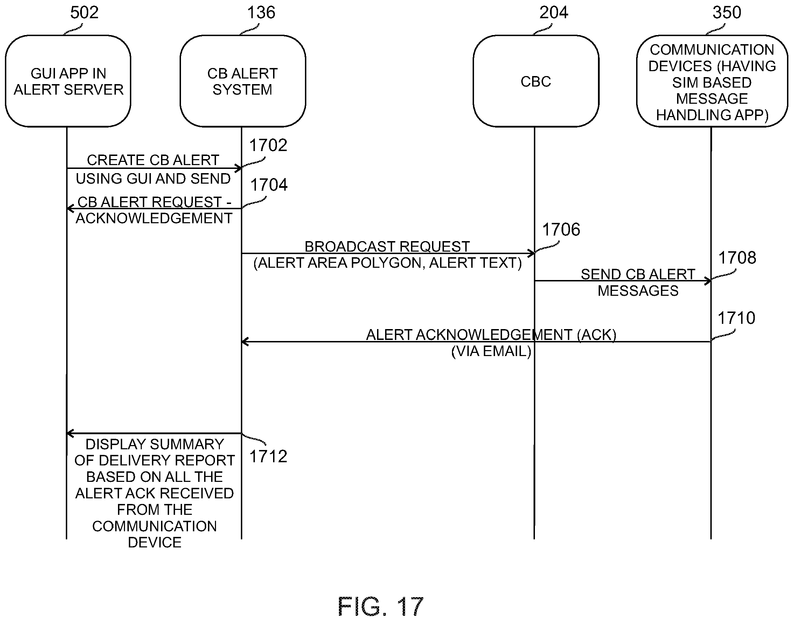

FIG. 17 illustrates a sequence flow diagram for managing acknowledgement messages, in accordance with another example embodiment.

In the embodiment, a CB alert message is created using the GUI 502 associated with the CB alert system 136. The alert application 206 may be associated with a public warning application or a business application (*see* 318). In an embodiment, the alert area is selected on a map and the geo-coordinates of the alert area are identified based on the selection on the map (*see* 404). At step 1702, the GUI 502 sends a CB alert request to the CB alert system 136. In an embodiment, the alert request is a Hyper Text transfer Protocol (HTTP) Post request. At step 1704, the CB alert system 136 sends an acknowledgement to the GUI 502 on receiving the alert request. The acknowledgement is a 200 OK response to the HTTP request. In an embodiment, the CB alert system 136 stores the received CB alert request and any additional information associated with the CB alert request in a database, for example the database 202. At step 1706, the CB alert system 136 sends the CB alert request (as broadcast request) to the Cell Broadcast Centre (CBC) 204 using a Hyper Text Transfer Protocol (HTTP), a Short Message Peer-to-Peer (SMPP) and/or a CAMEL Access Part (CAP) over Internet Protocol. In an embodiment, the broadcast request carries the geo-coordinates of the alert area, Cell Broadcast Channel and the CB alert message. In an embodiment, the CB alert system 136 packs a first four bytes of the CB alert message as the unique alert ID for this message.

At step 1708, the CBC 204 identifies the cell sites, for example BTS, NodeB, eNodeB, Home NodeB Gateways, under the alert area and packs the CB alert message in GSM3.41 format and the like. The CBC 204 then interfaces with various network entities like Base Station Controllers (BSCs), Radio Network Controller (RNCs) and/or Mobility Management Entity (MMEs) and relays the CB alert message to all communication devices under the alert area via the cell sites. In an example, the CB alert message is sent to the communication devices in the mobile network 350. In an embodiment, the communication devices in the mobile network 350 include a mobile based message handling app to manage CB alert messages.

At step 1710, the communication devices in the mobile network 350 receive the CB alert message on a configured broadcast channel using the Subscriber Identification Module (SIM) based message handling app. The mobile based message handling app sends an acknowledgement via E-mail to the configured UMS Alert Server E-mail address. UMS Alert Server has the capability to receive the E-mails. The alert acknowledgement may include a unique alert Identity, time at which the CB alert message was received at the communication device, channel on which the CB alert message was received, location of the communication device. The CB alert system 136 compiles all the acknowledgement messages received from the communication devices and prepares an alert reach summary or delivery report for the corresponding alert event. At step 1712, the summary of the delivery report is communicated to the GUI 502 via HTTP POST.

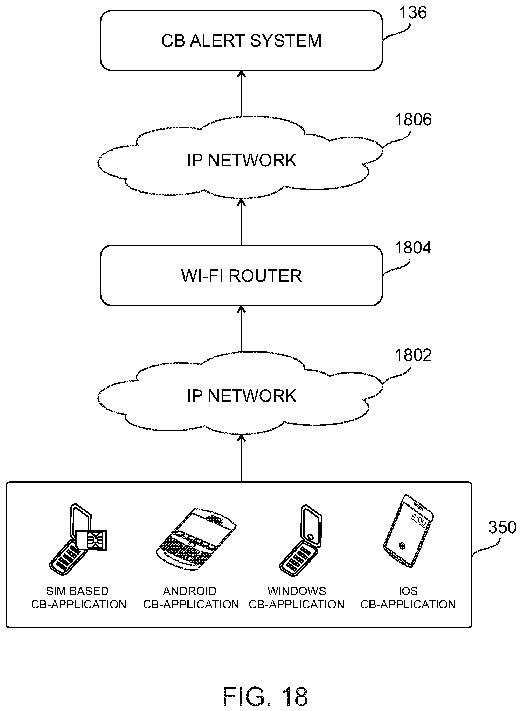

FIG. 18 illustrates a method to send CB acknowledgement message using a Wi-Fi network, in accordance with an example embodiment.

In the embodiment, a communication device after receiving a CB alert message from the CB alert system 136 can send a CB acknowledgement receipt using a Wi-Fi network associated with the communication device. Referring to the FIG. 18, a set of communication devices in the mobile network 350 is associated with a Wi-Fi Router 1804 using an Internet Protocol (IP) network 1802. Further, the Wi-Fi router 1804 is connected to the CB alert system 136 using an IP network 1806. Each of the communication devices in the set of communication devices in the mobile network 350 is associated with a CB alert handling application. The CB alert handling application is either a SIM based application or a Mobile based application. The mobile based applications include, but are not limited to, Android based application, Windows based application or iOS based application. In the embodiment, the Wi-Fi router 1804 is capable of receiving a CB acknowledgement from communication devices using a CB application installed or associated with the Wi-Fi router 1804.

The CB application allows the Wi-Fi router 1804 to receive CB alert acknowledgement messages and process the CB alert acknowledgement messages for further relays. Thus, the mobile app or SIM app associated with communication devices is connected to the Wi-Fi router 1804 over IP protocol and exchange the key information related to the CB acknowledgement message. For example, the key information includes, but is not limited to, application level contents like Mobile-Identity, International mobile subscriber identity (IMSI), Message-Identification (ID) number, Channel Number, Geographical location information and other message identity related information. The Wi-Fi router 1804 after receiving the CB acknowledgement message and key information would be able to push the CB acknowledgement message towards the CBC 204 via the IP network 1806. The CBC 204 may then relay this information to the CB alert system 136. Thus, the method will allow the communication devices to offload the acknowledgement from the cellular network and send it via the Wi-Fi router 1804. This will therefore offload the communication device uplink traffic (which is expensive) created by cell broadcast acknowledgment using the mobile app or the SIM app.

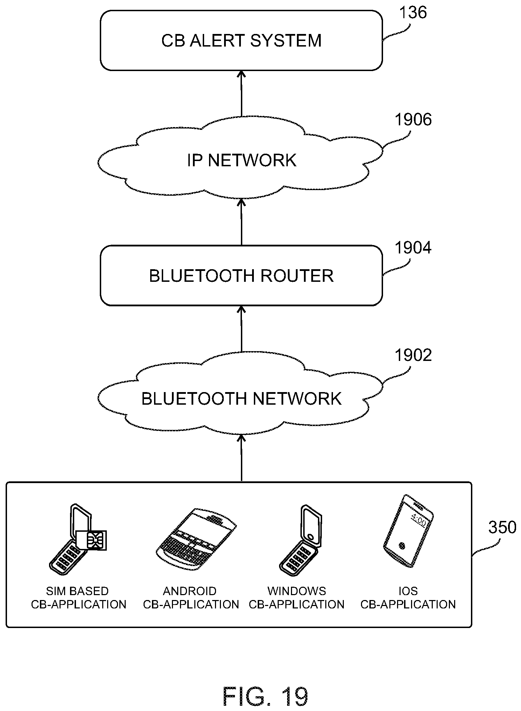

FIG. 19 illustrates a method to send CB acknowledgement message using a Bluetooth network, in accordance with an example embodiment.

In the embodiment, a communication device after receiving a CB alert message from the CB alert system 136 can send a CB acknowledgement receipt using a Bluetooth network to which the communication device is associated. Referring to the FIG. 19, a set of communication devices from the mobile network 350 is associated with a Bluetooth router 1904 using a Bluetooth network 1902. Further, the Bluetooth router 1904 is connected to the CB alert system 136 using an IP network 1906. Each of the communication devices in the set of communication devices in the mobile network 350 is associated with a CB alert handling application. The CB alert handling application is either a SIM based application or a mobile based application. The mobile based applications include but are not limited to, Android based application, Windows based application or iOS based application. In the embodiment, the Bluetooth router 1904 is capable of receiving a CB acknowledgement from communication devices using a CB application installed or associated with the Bluetooth router 1904.

The CB application allows the Bluetooth router 1904 to receive CB alert acknowledgement messages and process the CB alert acknowledgement messages for further relays. Thus, the mobile app or SIM app associated with communication devices is connected to the Bluetooth router 1904 over the Bluetooth network 1902 and exchange the key information related CB acknowledgement message. In an embodiment, the key information includes, but are not limited to, application level contents like Mobile-Identity, International mobile subscriber identity (IMSI), Message-Identification (ID) number, Channel Number, Geographical location information and other message identity related information. The Bluetooth router 1904 after receiving the CB acknowledgement message and key information would be able to push the CB acknowledgement message towards the CBC 204 via the IP network 1906. The CBC 204 may then relay this information to the CB alert system 136. Thus, the method allows the communication device to offload the acknowledgement from the cellular network which and send it via the Bluetooth router 1904. This will offload the communication device uplink traffic (which is expensive) created by cell broadcast acknowledgment using the mobile app or the SIM app.

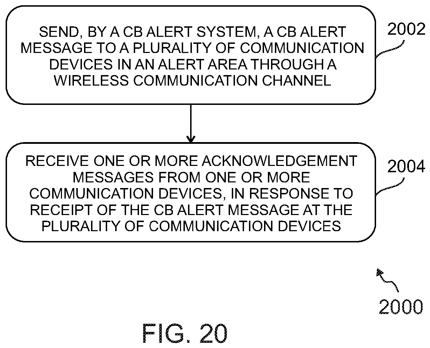

FIG. 20 illustrates a flow diagram of a method 2000 for managing Cell Broadcast (CB) alert messages, in accordance with an embodiment. The method 2000 depicted in the flow diagram may be executed by, for example, the CB alert system 136 explained with reference to FIGS. 2, 3 and 5. Operations of the flow diagram, and combinations of operation in the flow diagram, may be implemented by, for example, a hardware, a firmware, a processor, a circuitry and/or a different device associated with the execution of software that includes one or more computer program instructions. It is also noted that, the operations of the method 2000 can be practiced by using a system having configurations other than the CB alert system 136 as well. The method 2000 starts at step 2002.

At step 2002, the method 2000 sends a CB alert message to a plurality of communication devices in an alert area (*see* 404) through a wireless communication channel, say a CB channel. The CB alert message is sent by the CB alert system 136. In an embodiment, the processor 212 of the alert system 136 is configured to send the CB alert message. In the method 2000, each of the communication devices in the plurality of communication devices includes CB message handling application to receive and acknowledge the CB alert message. The CB message handling application is either a mobile based application or Subscriber Identity Module (SIM) based application. In an embodiment, the CB alert message is created using at least one of the alert application 206 or a Graphical User Interface (GUI) associated with the alert generation system operatively coupled with the CB alert system 136. The CB alert message may include an identification number associated with the CB alert message, a predefined text message, an alert area, or an interactive help module. The interactive help menu could be displaying messages on the message handling app and provides a pop-up screen to take user inputs. For example, in case of public warning the pop-up screen may indicate press '1' for evacuation with help. In such interactive help cases, the CB message handling app (a mobile based app or a SIM based app) piggy backs a CB-Uplink-Ack message with an additional user input. Thus, user input can be interpreted at the CB alert system 136 and presented to appropriate public safety authority over the GUI.

In the method 2000, the alert area is defined by identifying geo-coordinates of a predefined area on a map. The predefined area is a geographical area which is explicitly marked on the map by a user or is defined explicitly based on zip code, locality or any other unique identity of the alert area which is associated with an alert event. In an embodiment, the method 2000 identifies one or more communication network sites in the alert area. In the embodiment, the method 2000 further determines the one or more network elements responsible for handling communication in the one or more communication network sites. In an embodiment, the CB alert system 136 is configured to identify one or more communication sites in the alert area and also the one or more network elements.

At step 2004, the method 2000 receives one or more acknowledgement messages from one or more communication devices. The acknowledgement message is received in response to the receipt of the CB alert message at the plurality of communication devices. In an embodiment, the one or more acknowledgement messages are received from a CB message handling application in respective communication devices. In an embodiment, the processor 212 is configured to perform the step 2004. The acknowledgement messages received from the CB message handling application may include, a unique alert identity (ID) associated with the CB alert message, location of a communication device, a predefined text message, a user composed message, a communication channel, a user identification number, a Subscriber Identity Module (SIM) number, an International Mobile Station Equipment Identity (IMEI) number, a Cell Identity (ID), a Location Area Code, a Mobile Network Code (MNC), and a Mobile Country Code (MCC), and the like.

In an embodiment, the acknowledgement messages are sent as a Hyper Text Transfer Protocol (HTTP) Post message, a Short Message Service (SMS) message, an Electronic mail (E-mail) message, a voice mail message or a signalling message. In an embodiment, a first set of acknowledgement messages from the one or more acknowledgement messages are grouped and sent in a single communication packet for acknowledging the receipt of CB alert message. Thus, the method 2000 allows pooling of multiple alerts acknowledgements into single uplink acknowledgement message. The method 2000 further enables the message handling application to send one or more acknowledgement messages through a cellular network, an Internet Protocol network via a Wi-Fi router or an Internet Protocol network via a Bluetooth router (*see* FIG. 18 and 19).

In an embodiment, the method 2000 further prepares an acknowledgement statistic based on the one or more acknowledgement messages (*e.g*., a count of acknowledgement messages received from the communication devices) received from the one or more communication devices and the number of CB alert messages sent to the plurality of communication devices. Based on the above statistics the method 2000 identifies first set of communication devices which have not acknowledged the receipt of CB alert message. In an embodiment, the processor 212 is configured to identify the first set of communication devices. The method 2000 further performs a predefined action for the first set of communication devices. The predefined actions could be of re-sending the CB alert message to the first set of communication devices, establishing a voice communication channel with the first set of communication devices, or sending the CB alert message to emergency contact numbers associated with each communication device in the first set of communication devices. In an embodiment, the predefined actions are performed by the processor 212.

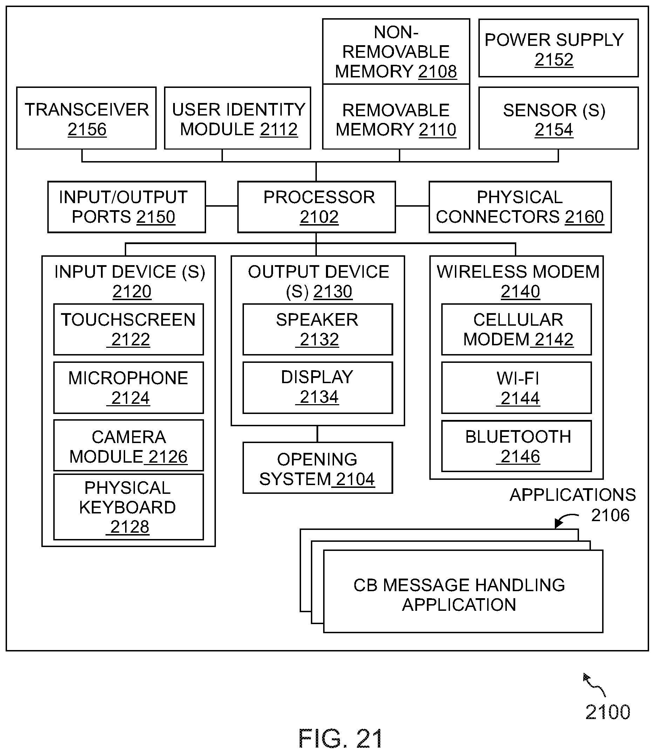

FIG. 21 is a schematic block diagram of a communication device, for example, a mobile device 2100 that is capable of implementing embodiments of managing Cell Broadcast (CB) alert messaging techniques described herein. It should be understood that the mobile device 2100 as illustrated and hereinafter described is merely illustrative of one type of device and should not be taken to limit the scope of the embodiments. As such, it should be appreciated that at least some of the components described below in connection with the mobile device 2100 may be optional and thus in an example embodiment may include more, less or different components than those described in connection with the example embodiment of the FIG. 21. As such, among other examples, the mobile device 2100 could be any of a mobile electronic devices, for example, personal digital assistants (PDAs), mobile televisions, gaming devices, cellular phones, tablet computers, laptops, mobile computers, cameras, mobile digital assistants, or any combination of the aforementioned, and other types of communication or multimedia devices.

The illustrated mobile device 2100 includes a controller or a processor 2102 (*e.g.,* a signal processor, microprocessor, ASIC, or other control and processing logic circuitry) for performing such tasks as signal coding, data processing, image processing, input/output processing, power control, and/or other functions. An operating system 2104 controls the allocation and usage of the components of the mobile device 2100 and support for one or more applications programs (*see* applications 2106), such as a Cell Broadcast (CB) message handling application, or the application could be a mobile based application or a SIM based application, that implements one or more of the innovative features described herein. In addition to the CB message handling application, the application programs can include common mobile computing applications (*e.g*., telephony applications, E-mail applications, calendars, contact managers, web browsers, messaging applications) or any other computing application.

The illustrated mobile device 2100 includes one or more memory components, for example, a non-removable memory 2108 and/or removable memory 2110. The non-removable memory 2108 can include RAM, ROM, flash memory, a hard disk, or other well-known memory storage technologies. The removable memory 2110 can include flash memory, smart cards, or a Subscriber Identity Module (SIM). The one or more memory components can be used for storing data and/or code for running the operating system 2104 and the applications 2106. Example of data can include web pages, text, images, sound files, image data, video data, or other data sets to be sent to and/or received from one or more network servers or other devices via one or more wired or wireless networks. The mobile device 2100 may further include a user identity module (UIM) 2112. The UIM 2112 may be a memory device having a processor built in. The UIM 2112 may include, for example, a subscriber identity module (SIM), a universal integrated circuit card (UICC), a universal subscriber identity module (USIM), a removable user identity module (R-UIM), or any other smart card. The UIM 2112 typically stores information elements related to a mobile subscriber. The UIM 2112 in form of the SIM card is well known in Global System for Mobile Communications (GSM) communication systems, Code Division Multiple Access (CDMA) systems, or with third-generation (3G) wireless communication protocols such as Universal Mobile Telecommunications System (UMTS), CDMA9000, wideband CDMA (WCDMA) and time division-synchronous CDMA (TD-SCDMA), or with fourth-generation (4G) wireless communication protocols such as LTE (Long-Term Evolution).

The mobile device 2100 can support one or more input devices 2120 and one or more output devices 2130. Examples of the input devices 2120 may include, but are not limited to, a touchscreen 2122 (*e.g.,* capable of capturing finger tap inputs, finger gesture inputs, multi-finger tap inputs, multi-finger gesture inputs, or keystroke inputs from a virtual keyboard or keypad), a microphone 2124 (*e.g.,* capable of capturing voice input), a camera module 2126 (*e.g.,* capable of capturing still picture images and/or video images) and a physical keyboard 2128. Examples of the output devices 2130 may include, but are not limited to a speaker 2132 and a display 2134. Other possible output devices (not shown in the FIG. 21) can include piezoelectric or other haptic output devices. Some devices can serve more than one input/output function. For example, the touchscreen 2122 and the display 2134 can be combined into a single input/output device.

A wireless modem 2140 can be coupled to one or more antennas (not shown in the FIG. 21) and can support two-way communications between the processor 2102 and external devices, as is well understood in the art. The wireless modem 2140 is shown generically and can include, for example, a cellular modem 2142 for communicating at long range with the mobile communication network, a Wi-Fi compatible modem 2144 for communicating at short range with an external Bluetooth-equipped device or a local wireless data network or router, and/or a Bluetooth-compatible modem 2146. The wireless modem 2140 is typically configured for communication with one or more cellular networks, such as a GSM network for data and voice communications within a single cellular network, between cellular networks, or between the mobile device 2100 and a public switched telephone network (PSTN).

The mobile device 2100 can further include one or more input/output ports 2150, a power supply 2152, one or more sensors 2154 for example, an accelerometer, a gyroscope, a compass, or an infrared proximity sensor for detecting the orientation or motion of the mobile device 2100, a transceiver 2156 (for wirelessly transmitting analog or digital signals) and/or a physical connector 2160, which can be a USB port, IEEE 1394 (FireWire) port, and/or RS-232 port. The illustrated components are not required or all-inclusive, as any of the components shown can be deleted and other components can be added.

With the CB message handling applications (*see* 2106) and/or other software or hardware components, the mobile device 2100 can implement the technologies described herein. For example, the processor 2102 can facilitate receipt of a CB message, process the CB message and facilitate transmission of an acknowledgement of the receipt of the CB message to a pre-defined network component or a CB alert system (*see* 136).

Although the mobile device 2100 is illustrated in FIG. 21 in form of a smartphone, but more particularly, the techniques and solutions described herein can be implemented with connected devices having other screen capabilities and device form factors, such as a tablet computer, a virtual reality device connected to a mobile or desktop computer, an image sensor attached to a gaming console or television, and the like. Without in any way limiting the scope, interpretation, or application of the claims appearing below, a technical effect of one or more of the example embodiments disclosed herein is to provide a method and system to manage CB alert messages in a wireless communication network.

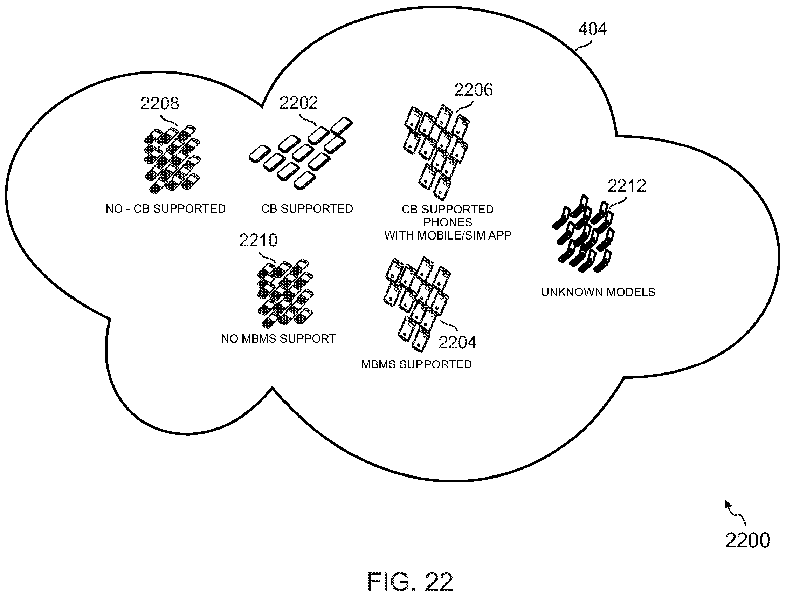

FIG. 22 illustrates an exemplary depiction 2200 of communication devices in an alert area based on their capabilities to receive broadcast alert messages, in accordance with an embodiment. In the embodiment, Cell Broadcast (CB) capabilities of communication devices in the alert area, for example the alert area 404 is identified. Thus, a number of communication devices capable of receiving broadcast alert message in the alert area 404, is determined. In an embodiment, the communication devices are grouped based on whether they are capable of receiving broadcast alert messages or not. The broadcast alert message can be received by communication devices that are CB supported or Multimedia Broadcast Multicast Services (MBMS) supported, or by the communication devices that have mobile applications or Subscriber Identification Module (SIM) application installed in them that are CB supported.

Hence, the CB alert capabilities of the communication devices in the alert area 404 is identified using CB configuration in the communication devices using signalling data and/or based on registration of mobile applications or SIM application in the communication devices. Thereafter, a possible number of communication devices that could be reached by the cell broadcast in the alert area, for example the alert area 404, is identified.

In the embodiment, some of the communication devices capabilities in the alert area 404 are identified using signalling interface data. The signalling interfaces include, but are not limited to, A interface, Gb interface, Iu-CS interface, Iu-PS interface and S1 interface. Additionally, other devices capabilities are identified using Mobile application or SIM application registration information.

In another embodiment, Operating System (OS) installed in a communication devices is configured such that it checks the communication device CB reception or MBMS reception capability and broadcast the communication device capability to the CB alert system 136 either periodically or once during registration. Examples of OS installed in the communication device include, but are not limited to, Android, iOS, Windows, and the like. Therefore, the OS in the communication devices can be modified to check whether the CB or MBMS is configured in the communication devices to receive broadcast messages or emergency broadcast alerts and then this information can be sent to CB alert system 136.

In the example representation 2200, the alert area 404 is depicted that is geographically marked to send broadcast alert messages. The alert area 404 is shown to include plurality of communication devices. Each of the plurality of communication devices are then analysed to identify their capabilities to receive broadcast alert messages. The capabilities are identified based on signalling data, data received from mobile application or SIM application, or data received by customized OS of the communication devices. In an embodiment, the plurality of communication devices is grouped based on their capabilities.

For example, the plurality of communication devices in the alert area 404 are analysed to identify a number of communication devices that are inherently CB supported, MBMS supported, and CB supported communication devices using Mobile applications or SIM applications. As a result, the communication devices that do not support CB or MBMS can also be identified. In addition, the communication devices that are not recognized are also identified. In an embodiment, grouping of the plurality of communication devices based on their capabilities is for the sake of clarity and representation purpose only, and should not be considered as limiting to scope of various embodiments.

In the alert area 404, the communication devices that support CB are grouped and referred to as 2202, the communication devices that support MBMS are grouped and referred to as 2204, the communication devices that support CB and are installed with mobile or SIM applications are grouped and referred to as 2206. Similarly, the communication devices that do not support CB are grouped and referred to as 2208 and the communication devices that do not support MBMS are grouped and referred to as 2210. The communication devices that do not belong to 2202-2210 are grouped together as 2212 and are referred as 'unknown communication devices models'. Therefore, the approximate number of communication devices that are capable of receiving the broadcast (CB) alert messages is identified prior to sending the CB alert messages.

Hence, the actual acknowledgements received from the communication devices after sending CB alert messages can be compared with the approximate number of communication devices to identify if the broadcast message is received by the right number of target users. In an embodiment, the communication devices that are incapable of receiving the CB alert message are also identified. Thereafter, an alternate alert notification technique is determined for the communication devices that are incapable of receiving the CB alert message. Examples of the alternate alert notification technique may include, but are not limited to Short Message Service (SMS), Unstructured Supplementary Service Data (USSD), Call, Multimedia Message Service (MMS) and the like. Thus, the alert message could be sent using alternate notification techniques to the communication devices that are incapable of receiving broadcast alert messages. Therefore, the maximum number of communication devices could be reached to send alert messages in the alert area. For the purpose of this description and for the sake of clarity, the method is further explained with the help of following non-limiting examples.

For example, if the selected alert area 404 has 10000 communication devices (subscribers) then the communication devices could be analysed to identify, 1) number of communication devices that are CB enabled communication devices, 2) number of communication devices that are CB enabled through SIM application or Mobile application devices, 3) number of communication devices that are capable of sending CB alert capability through OS customization, and 4) number of a set of communication devices that are incapable of receiving the CB alert messages (non CB supporting communication devices). For the purpose of this example, it is identified that out of 10000 communication devices, 5000 communication devices are CB enabled, 3500 communication devices are configured to receive CB alert based on the OS custom notification. Similarly, 500 communication devices are capable of receiving CB alert messages but are not configured to receive CB alert messages because of either internal settings or automatic settings. Additionally, 1000 communication devices are identified as non CB support devices.

Based on the above analysis, the method of the present disclosure identifies that, 8500 communication devices (*i.e.* 5000+3500) from the 10000 communication devices are in the scope to receive the CB message, prior to sending the CB alert messages. This is 85% of the total communication devices in the alert area 404. Therefore, the technique can help the CB alert system 136 to predict the reach of the CB alert message before the CB alert is initiated. Therefore, to reach out maximum communication devices in the alert area 404, other communication channel such as SMS, USSD, Call, MMS and the like could also be used to send alert messages to the remaining 1500 (15%) of communication devices.

The present disclosure is described above with reference to block diagrams and flowchart illustrations of method and device embodying the present disclosure. It will be understood that various block of the block diagram and flowchart illustrations, and combinations of blocks in the block diagrams and flowchart illustrations, respectively, may be implemented by a set of computer program instructions. These set of instructions may be loaded onto a general purpose computer, special purpose computer, or other programmable data processing apparatus to cause a device, such that the set of instructions when executed on the computer or other programmable data processing apparatus create a means for implementing the functions specified in the flowchart block or blocks. Although other means for implementing the functions including various combinations of hardware, firmware and software as described herein may also be employed.

Various embodiments described above may be implemented in software, hardware, application logic or a combination of software, hardware and application logic. The software, application logic and/or hardware may reside on at least one memory, at least one processor, an apparatus or, a non-transitory computer program product. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a system described and depicted in FIGS. 2, 3 and/or 5. A computer-readable medium may comprise a computer-readable storage medium that may be any media or means that can contain or store the instructions for use by or in connection with an instruction execution system, apparatus, or device, such as a computer.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omissions and substitutions of equivalents are contemplated as circumstance may suggest or render expedient. The invention is defined by the independent claims.

## Claims

1. A method of managing Cell Broadcast, CB, alert messages in a wireless communication network (102), the method comprising:
determining a plurality of communication devices capable of receiving the CB alert message in an alert area (404) from a number of communication devices in the alert area (404) that are CB supported, MBMS supported, and CB supported communication devices using mobile applications or SIM applications;
predicting the reach of the CB alert message to the number of communication devices in the alert area (404) before a CB alert is initiated;
sending, by a CB alert system (136), a CB alert message to the plurality of communication devices in the alert area (404) through a wireless communication channel, each of the plurality of communication devices comprising a CB message handling application (2106);
receiving one or more acknowledgement messages from one or more communication devices of the plurality of communication devices, in response to receipt of the CB alert message at the plurality of communication devices, wherein the one or more acknowledgement messages are received from the CB message handling application (2106) in respective communication devices;
wherein an acknowledgement statistic based on the one or more acknowledgement messages received from the one or more communication devices and the CB alert message sent to the plurality of communication devices is prepared;
determining a first set of communication devices based on the acknowledgement statistic;
performing a predefined action on the first set of communication devices, wherein the predefined action includes at least one of re-sending the CB alert message to the first set of communication devices, establishing a voice communication channel with the first set of communication devices, and sending an alert message to emergency contact numbers associated with each communication device in the first set of communication devices, wherein the alert message is associated with the CB alert message; and
wherein the alert area (404) is determined based on geo-coordinates corresponding to a predefined area on a map, and wherein the predefined area is a geographical area where the CB alert message is sent, and specific cell sites (126, 128, 130) associated with the alert area (404) are identified using the identified geo-coordinates.

2. The method of claim 1, wherein the sending of the CB alert message comprises:
identifying one or more communication network sites associated with the alert area (404);
determining one or more network elements (104-108) responsible for handling communication in the one or more communication network sites; and
delivering the CB alert message to the plurality of communication devices associated with the one or more network elements (104-108).

3. The method of claim 1, wherein the one or more acknowledgement messages comprise at least one of a unique alert identity (ID) associated with the CB alert message, location of a communication device, a predefined text message, a user composed message, a communication channel information, a user identification number, a Mobile Station International Subscriber Directory Number, MSISDN, an International Mobile Subscriber Identity, IMSI, a Subscriber Identity Module, SIM, number, an International Mobile Station Equipment Identity, IMEI, number, a Cell Identity, ID, a Location Area Code, a Mobile Network Code, MNC, and a Mobile Country Code, MCC.

4. The method of claim 1, wherein the one or more acknowledgement messages comprise at least one of a Hyper Text Transfer Protocol, HTTP, Post message, a Short Message Service, SMS, message, an Electronic mail, E-mail, message, a voice mail message, and a signalling message.

5. The method of claim 1, wherein the CB alert message comprises at least one of an identification number associated with the CB alert message, a predefined text message, an alert area information, and an interactive help module.

6. The method of claim 1, further comprising creating the CB alert message using at least one of an alert application (206) and a Graphical User Interface, GUI, associated with the CB alert system (136).

7. The method of claim 1, further comprising receiving a first set of acknowledgement messages from the one or more acknowledgement messages as a group message in a single communication packet, wherein the single communication packet is a CB uplink acknowledgement message.

8. The method of claim 1, further comprising receiving the one or more acknowledgement messages through at least one of a cellular network, an Internet Protocol network via a Wireless Fidelity, Wi-Fi, router and an Internet Protocol network via a Bluetooth router.

9. The method of claim 1, wherein the determining the number of communication devices comprises performing at least one of:
accessing capability of communication devices from the plurality of communication devices to receive CB alert message based on signalling data; and
identifying communication devices enabled with an application (2106) in the alert area (404), wherein the application (2106) is at least one of a mobile application or a Subscriber Identification Module, SIM, application including a setting to receive CB alert messages.

10. The method of claim 1, further comprising:
identifying a set of communication devices incapable of receiving the CB alert message;
finding an alternate alert notification technique for each communication device in the set of communication devices, wherein the alternate alert notification technique is different from a CB alert technique; and
sending an alert message to the each communication device using the alternate alert notification technique.

11. The method of claim 1, further comprising:
determining a count of acknowledgement messages received from the one or more communication devices; and
determining statistics associated with a number of subscribers who have received the CB alert message.

12. A Cell Broadcast, CB, alert system (136) for managing CB alert messages, the CB alert system (136) comprising:
a memory (214) to store instructions for managing the CB alert messages; and
a processor (212) operatively coupled with the memory (214) to execute the instructions stored in the memory (214), the processor (212) configured to:
determine a plurality of communication devices capable of receiving the CB alert message in an alert area (404) from a number of communication devices in the alert area (404) that are CB supported, MBMS supported, and CB supported communication devices using mobile applications or SIM applications;
predict the reach of the CB alert message to the number of communication devices in the alert area (404) before a CB alert is initiated;
send a CB alert message to the plurality of communication devices in an alert area (404) through a wireless communication channel, wherein each of the plurality of communication devices comprises a CB message handling application (2106);
receive one or more acknowledgement messages from one or more communication devices, in response to receipt of the CB alert message at the plurality of communication devices, wherein the one or more acknowledgement messages are received from the CB message handling application (2106) in respective communication devices;
wherein an acknowledgement statistic based on the one or more acknowledgement messages received from the one or more communication devices and the CB alert message sent to the plurality of communication devices is prepared;
determine a first set of communication devices based on the acknowledgement statistic ;
perform a predefined action on the first set of communication devices, wherein the predefined action includes at least one of re-sending the CB alert message to the first set of communication devices, wherein the predefined action includes establishing a communication channel with the first set of communication devices, and sending an alert message to emergency contact numbers associated with each communication device in the first set of communication devices, wherein the alert message is associated with the CB alert message; and
wherein the alert area (404) is determined based on geo-coordinates corresponding to a predefined area on a map, and wherein the predefined area is a geographical area where the CB alert message is sent, and specific cell sites (126, 128, 130) associated with the alert area (404) are identified using the identified geo-coordinates.

13. The CB alert system (136) of claim 12, wherein the processor (212) is further configured to:
identify one or more communication network sites associated with the alert area (404);
determine one or more network elements (104-108) responsible for handling communication in the one or more communication network sites; and
deliver the CB alert message to the plurality of communication devices associated with the one or more network elements (104-108).

14. The CB alert system (136) of claim 12, wherein the one or more acknowledgement messages comprise at least one of a unique alert identity, ID, associated with the CB alert message, location of a communication device, a predefined text message, a user composed message, a communication channel information, a user identification number, Mobile Station International Subscriber Directory Number, MSISDN, an International Mobile Subscriber Identity, IMSI, a Subscriber Identity Module, SIM, number, an International Mobile Station Equipment Identity, IMEI, number, a Cell Identity, ID, a Location Area Code, a Mobile Network Code, MNC, and a Mobile Country Code, MCC.

## Patentansprüche

1. Verfahren zur Verwaltung von Cell Broadcast (CB) Warnhinweis-Meldungen in einem drahtlosen Kommunikationsnetzwerk (102), wobei das Verfahren umfasst:
Bestimmen einer Mehrzahl von Kommunikationsgeräten, die befähigt sind, die CB-Warnhinweis-Meldung in einem Warnhinweis-Bereich (404) von einer Anzahl von Kommunikationsgeräten im Warnhinweis-Bereich (404) zu empfangen, die CB-unterstützte, MBMS-unterstützte, und CB-unterstützte Kommunikationsgeräte sind, die mobile Anwendungen oder SIM-Anwendungen verwenden;
Vorhersagen der Reichweite der CB-Warnhinweis-Meldung unter der Anzahl von Kommunikationsgeräten im Warnhinweis-Bereich (404) bevor ein CB-Warnhinweis ausgelöst wird;
Senden durch ein CB-Warnhinweis-System (136) einer CB-Warnhinweis-Meldung an die Mehrzahl von Kommunikationsgeräten im Warnhinweis-Bereich (404) über einen drahtlosen Kommunikationskanal, wobei jedes der Mehrzahl von Kommunikationsgeräten eine Anwendung (2106) zur Handhabung von CB-Meldungen umfasst;
Empfangen einer oder mehrerer Bestätigungsmeldungen von einem oder mehreren Kommunikationsgeräten aus der Mehrzahl von Kommunikationsgeräten als Antwort auf den Erhalt der CB-Warnhinweis-Meldung bei der Mehrzahl von Kommunikationsgeräten, wobei die eine oder mehreren Bestätigungsmeldungen von der Anwendung (2106) zur Handhabung von CB-Meldungen in den jeweiligen Kommunikationsgeräten erhalten werden;
wobei einer Bestätigungsstatistik auf der Basis der einen oder mehreren empfangenen Bestätigungsmeldungen von den einen oder mehreren Kommunikationsgeräten und der CB-Warnhinweis-Meldung, die an die Mehrzahl von Kommunikationsgeräten gesandt worden Vorbereiten ist;
Bestimmen eines ersten Satzes von Kommunikationsgeräten auf der Basis der Bestätigungsstatistik;
Ausführen einer vordefinierten Aktion auf dem ersten Satz von Kommunikationsgeräten, wobei die vordefinierte Aktion zumindest eine von Nochmals-Senden der CB-Warnhinweis-Meldung an den ersten Satz von Kommunikationsgeräten, Aufbauen eines Gesprächskommunikationskanals mit dem ersten Satz von Kommunikationsgeräten, und Senden einer Warnhinweis-Meldung an Notfallkontaktnummern, die mit jedem Kommunikationsgerät im ersten Satz von Kommunikationsgeräten assoziiert sind, einschließt, wobei die Warnhinweis-Meldung mit der CB-Warnhinweis-Meldung assoziiert ist; und
wobei der Warnhinweis-Bereich (404) auf der Basis der Geokoordinaten entsprechend einem vordefinierten Bereich auf einer Landkarte bestimmt wird, und wobei der vordefinierte Bereich ein geografischer Bereich ist, in den die CB-Warnhinweis-Meldung gesandt wurde, und spezifische Mobilfunkstandorte (126, 128, 130), die mit dem Warnhinweis-Bereich (404) assoziiert sind, unter Verwendung der identifizierten Geokoordinaten identifiziert werden.

2. Verfahren nach Anspruch 1, wobei das Senden der CB-Warnhinweis-Meldung umfasst:
Identifizieren eines oder mehrerer mit dem Warnhinweis-Bereich (404) assoziierten Kommunikationsnetzwerkstandorte;
Bestimmen eines oder mehrerer Netzwerkelemente (104-108), die für die Handhabung der Kommunikation in den einen oder mehreren Kommunikationsnetzwerkstandorten zuständig sind; und
Liefern der CB-Warnhinweis-Meldung an die Mehrzahl von Kommunikationsgeräten, die mit den einen oder mehreren Netzwerkelementen (104-108) assoziiert sind.

3. Verfahren nach Anspruch 1, wobei die eine oder mehreren Bestätigungsmeldungen zumindest eines der Folgenden umfassen: eine eineindeutige mit der CB-Warnhinweis-Meldung assoziierte Warnhinweis-Identität (ID), Standort eines Kommunikationsgeräts, eine vordefinierte Textmeldung, eine benutzergeschriebene Meldung, eine Kommunikationskanal-Information, eine Benutzeridentifikationsnummer, eine Mobile Station International Subscriber Directory Number (MSISDN), eine International Mobile Subscriber Identity (IMSI), eine Subscriber Identity Module (SIM) Nummer, eine International Mobile Station Equipment Identity (IMEI) Nummer, eine Zellidentität (ID), eine Standortvorwahlnummer, eine Mobilnetzwerkkennung (MNC) und eine Mobil-Länderkennung (MCC).

4. Verfahren nach Anspruch 1, wobei die eine oder mehreren Bestätigungsmeldungen zumindest einer der Folgenden umfassen: eine Hyper Text Transfer Protocol (HTTP) Post-Meldung, eine Short Message Service (SMS) Meldung, eine Electronic Mail (E-Mail) Meldung, eine Voicemail-Meldung und eine Signalmeldung.

5. Verfahren nach Anspruch 1, wobei die CB-Warnhinweis-Meldung zumindest eines der Folgenden umfasst: eine mit der CB-Warnhinweis-Meldung assoziierte Identifikationsnummer, eine vordefinierte Textmeldung, eine Warnhinweis-Bereichsinformation und ein interaktives Hilfemodul.

6. Verfahren nach Anspruch 1, weiterhin umfassend das Erzeugen der CB-Warnhinweis-Meldung unter Verwendung zumindest einer der Folgenden, einer Warnhinweis-Anwendung (206) und einer grafischen Benutzeroberfläche (GUI), die mit dem CB-Warnhinweis-System (136) assoziiert ist.

7. Verfahren nach Anspruch 1, weiterhin umfassend das Empfangen eines ersten Satzes von Bestätigungsmeldungen aus den einen oder mehreren Bestätigungsmeldungen als eine Gruppenmeldung in einem einzelnen Kommunikationspaket, wobei das einzelne Kommunikationspaket eine CB-Uplink-Bestätigungsmeldung ist.

8. Verfahren nach Anspruch 1, weiterhin umfassend das Empfangen der einen oder mehreren Bestätigungsmeldungen über zumindest eines der Folgenden: ein Mobilfunknetzwerk, ein Internetprotokoll-Netzwerk über einen Wireless Fidelity (Wi-Fi) Router und ein Internetprotokoll-Netzwerk über einen Bluetooth-Router.

9. Verfahren nach Anspruch 1, wobei das Bestimmen der Anzahl von Kommunikationsgeräten das Durchführen zumindest eines der Folgenden umfasst:
Zugreifen auf die Befähigung von Kommunikationsgeräten aus der Mehrzahl von Kommunikationsgeräten, CB-Warnhinweis-Meldungen auf der Basis von Signaldaten zu empfangen; und
Identifizieren von Kommunikationsgeräten im Warnhinweis-Bereich (404), die mit einer Anwendung (2106) ausgestattet sind, wobei die Anwendung (2106) zumindest eine der Folgenden ist: eine mobile Anwendung oder eine Subscriber Identification Module (SIM) Anwendung einschließlich einer Einstellung zum Empfangen von CB-Warnhinweis-Meldungen.

10. Verfahren nach Anspruch 1, weiterhin umfassend:
Identifizieren eines Satzes von Kommunikationsgeräten, die nicht befähigt sind, die CB-Warnhinweis-Meldung zu empfangen;
Auffinden einer alternativen Warnhinweis-Benachrichtigungstechnik für jedes Kommunikationsgerät in dem Satz von Kommunikationsgeräten, wobei die alternative Warnhinweis-Benachrichtigungstechnik von einer CB-Warnhinweis-Technik verschieden ist; und
Senden einer Warnhinweis-Meldung an jedes Kommunikationsgerät unter Verwendung der alternativen Warnhinweis-Benachrichtigungstechnik.

11. Verfahren nach Anspruch 1, weiterhin umfassend:
Bestimmen einer Anzahl von von den einen oder mehreren Kommunikationsgeräten erhaltenen Bestätigungsmeldungen; und
Bestimmen von Statistiken, die mit einer Anzahl von Abonnenten assoziiert sind, die die CB-Warnhinweis-Meldung empfangen haben.

12. Cell Broadcast (CB) Warnhinweis-System (136) zum Verwalten von CB-Warnhinweis-Meldungen, wobei das CB-Warnhinweis-System (136) umfasst:
einen Arbeitsspeicher (214) zum Speichern von Instruktionen zum Verwalten der CB-Warnhinweis-Meldungen; und
einen Prozessor (212) betriebsmäßig mit dem Arbeitsspeicher (214) gekoppelt zum Ausführen der im Arbeitsspeicher (214) gespeicherten Instruktionen, wobei der Prozessor (212) zu Folgendem konfiguriert ist:
Bestimmen einer Mehrzahl von Kommunikationsgeräten, die befähigt sind, die CB-Warnhinweis-Meldung in einem Warnhinweis-Bereich (404) von einer Anzahl von Kommunikationsgeräten im Warnhinweis-Bereich (404) zu empfangen, die CB-unterstützte, MBMS-unterstützte, und CB-unterstützte Kommunikationsgeräte sind, die mobile Anwendungen oder SIM-Anwendungen verwenden;
Vorhersagen der Reichweite der CB-Warnhinweis-Meldung unter der Anzahl von Kommunikationsgeräten im Warnhinweis-Bereich (404) bevor ein CB-Warnhinweis ausgelöst wird;
Senden einer CB-Warnhinweis-Meldung an die Mehrzahl von Kommunikationsgeräten in einem Warnhinweis-Bereich (404) über einen drahtlosen Kommunikationskanal, wobei jedes der Mehrzahl von Kommunikationsgeräten eine Anwendung (2106) zur Handhabung von CB-Meldungen umfasst;
Empfangen einer oder mehrerer Bestätigungsmeldungen von einem oder mehreren Kommunikationsgeräten als Antwort auf den Empfang der CB-Warnhinweis-Meldung bei der Mehrzahl von Kommunikationsgeräten, wobei die eine oder mehreren Bestätigungsmeldungen von der Anwendung (2106) zur Handhabung von CB-Meldungen in den jeweiligen Kommunikationsgeräten erhalten werden;
wobei einer Bestätigungsstatistik auf der Basis der einen oder mehreren empfangenen Bestätigungsmeldungen von den einen oder mehreren Kommunikationsgeräten und der CB-Warnhinweis-Meldung, die an die Mehrzahl von Kommunikationsgeräten gesandt worden Vorbereiten ist;
Bestimmen eines ersten Satzes von Kommunikationsgeräten auf der Basis der Bestätigungsstatistik;
Ausführen einer vordefinierten Aktion auf dem ersten Satz von Kommunikationsgeräten, wobei die vordefinierte Aktion zumindest eine von Nochmals-Senden der CB-Warnhinweis-Meldung an den ersten Satz von Kommunikationsgeräten einschließt, wobei die vordefinierte Aktion Aufbauen eines Kommunikationskanals mit dem ersten Satz von Kommunikationsgeräten, und Senden einer Warnhinweis-Meldung an die Notfallkontaktnummer, die mit jedem Kommunikationsgerät im ersten Satz von Kommunikationsgeräten assoziiert sind, einschließt, wobei die Warnhinweis-Meldung mit der CB-Warnhinweis-Meldung assoziiert ist; und
wobei der Warnhinweis-Bereich (404) auf der Basis der Geokoordinaten entsprechend einem vordefinierten Bereich auf einer Landkarte bestimmt wird, und wobei der vordefinierte Bereich ein geografischer Bereich ist, in den die CB-Warnhinweis-Meldung gesandt wurde, und spezifische Mobilfunkstandorte (126, 128, 130), die mit dem Warnhinweis-Bereich (404) assoziiert sind, unter Verwendung der identifizierten Geokoordinaten identifiziert werden.

13. CB-Warnhinweis-System (136) nach Anspruch 12, wobei der Prozessor (212) weiterhin zu Folgendem konfiguriert ist:
Identifizieren eines oder mehrerer mit dem Warnhinweis-Bereich (404) assoziierten Kommunikationsnetzwerkstandorte;
Bestimmen eines oder mehrerer Netzwerkelemente (104-108), die für die Handhabung der Kommunikation in den einen oder mehreren Kommunikationsnetzwerkstandorten zuständig sind; und
Liefern der CB-Warnhinweis-Meldung an die Mehrzahl von Kommunikationsgeräten, die mit den einen oder mehreren Netzwerkelementen (104-108) assoziiert sind.

14. CB-Warnhinweis-System (136) nach Anspruch 12, wobei die eine oder mehreren Bestätigungsmeldungen zumindest eines der Folgenden umfassen: eine eineindeutige mit der CB-Warnhinweis-Meldung assoziierte Warnhinweis-Identität (ID), Standort eines Kommunikationsgeräts, eine vordefinierte Textmeldung, eine benutzergeschriebene Meldung, eine Kommunikationskanal-Information, eine Benutzeridentifikationsnummer, eine Mobile Station International Subscriber Directory Number (MSISDN), eine International Mobile Subscriber Identity (IMSI), eine Subscriber Identity Module (SIM) Nummer, eine International Mobile Station Equipment Identity (IMEI) Nummer, eine Zellidentität (ID), eine Standortvorwahlnummer, eine Mobilnetzwerkkennung (MNC) und eine Mobil-Länderkennung (MCC).

## Revendications

1. Un procédé de gestion de messages d'alerte de radiodiffusion cellulaire, CB, dans un réseau de communication sans fil (102), le procédé comprenant :
la détermination d'une pluralité de dispositifs de communication capables de recevoir le message d'alerte CB dans une zone d'alerte (404) à partir d'un nombre de dispositifs de communication dans la zone d'alerte (404) qui sont des dispositifs de communication avec prise en charge CB, prise en charge MBMS et prise en charge CB au moyen d'applications mobiles ou d'applications SIM,
la prédiction de la portée du message d'alerte CB vers le nombre de dispositifs de communication dans la zone d'alerte (404) avant le lancement d'une alerte CB,
l'envoi, par un système d'alerte CB (136), d'un message d'alerte CB à la pluralité de dispositifs de communication dans la zone d'alerte (404) par l'intermédiaire d'un canal de communication sans fil, chaque dispositif de la pluralité de dispositifs de communication comprenant une application de gestion de messages CB (2106),
la réception d'un ou de plusieurs messages d'accusé de réception à partir d'un ou de plusieurs dispositifs de communication de la pluralité de dispositifs de communication, en réponse à la réception du message d'alerte CB au niveau de la pluralité de dispositifs de communication, où les un ou plusieurs messages d'accusé de réception sont reçus à partir de l'application de gestion de messages CB (2106) dans des dispositifs de communication respectifs,
où une statistique d'accusé de réception en fonction des un ou plusieurs messages d'accusé de réception reçus des un ou plusieurs dispositifs de communication et du message d'alerte CB envoyé à la pluralité de dispositifs de communication est préparée,
la détermination d'un premier ensemble de dispositifs de communication en fonction de la statistique d'accusé de réception,
l'exécution d'une action prédéfinie sur le premier ensemble de dispositifs de communication, où l'action prédéfinie comprend au moins une opération parmi le renvoi du message d'alerte CB au premier ensemble de dispositifs de communication, l'établissement d'un canal de communication vocal avec le premier ensemble de dispositifs de communication, et l'envoi d'un message d'alerte à des numéros de contact d'urgence associés à chaque dispositif de communication dans le premier ensemble de dispositifs de communication, où le message d'alerte est associé au message d'alerte CB, et
où la zone d'alerte (404) est déterminée en fonction de coordonnées géographiques correspondant à une zone prédéfinie sur une carte, et où la zone prédéfinie est une zone géographique vers laquelle le message d'alerte CB est envoyé, et des sites cellulaires spécifiques (126, 128, 130) associés à la zone d'alerte (404) sont identifiés au moyen des coordonnées géographiques identifiées.

2. Le procédé selon la Revendication 1, où l'envoi du message d'alerte CB comprend :
l'identification d'un ou de plusieurs sites de réseau de communication associés à la zone d'alerte (404),
la détermination d'un ou de plusieurs éléments de réseau (104-108) responsables de la gestion de la communication dans les un ou plusieurs sites de réseau de communication, et
la remise du message d'alerte CB à la pluralité de dispositifs de communication associés aux un ou plusieurs éléments de réseau (104-108).

3. Le procédé selon la Revendication 1, où les un ou plusieurs messages d'accusé de réception comprennent au moins un élément parmi une identité (ID) d'alerte unique associée au message d'alerte CB, l'emplacement d'un dispositif de communication, un message textuel prédéfini, un message composé par un utilisateur, des informations de canal de communication, un numéro d'identification d'utilisateur, un numéro d'annuaire d'abonné international de station mobile, MSISDN, une identité d'abonné mobile internationale, IMSI, un numéro de module d'identification d'abonné, SIM, un numéro d'identité d'équipement de station mobile internationale, IMEI, une identité de cellule, ID, un code de zone de localisation, un code de réseau mobile, MNC, et un code de pays mobile, MCC.

4. Le procédé selon la Revendication 1, où les un ou plusieurs messages d'accusé de réception comprennent au moins un élément parmi un message posté de protocole de transfert hypertexte, HTTP, un message de service d'envoi de messages courts, SMS, un message de courrier électronique, un message de courrier vocal et un message de signalisation.

5. Le procédé selon la Revendication 1, où le message d'alerte CB contient au moins un élément parmi un numéro d'identification associé au message d'alerte CB, un message textuel prédéfini, des informations de zone d'alerte et un module d'aide interactif.

6. Le procédé selon la Revendication 1, comprenant en outre la création du message d'alerte CB au moyen d'au moins un élément parmi une application d'alerte (206) et une interface utilisateur graphique, GUI, associée au système d'alerte CB (136).

7. Le procédé selon la Revendication 1, comprenant en outre la réception d'un premier ensemble de messages d'accusé de réception à partir des un ou plusieurs messages d'accusé de réception sous la forme d'un message de groupe dans un paquet de communication unique, où le paquet de communication unique est un message d'accusé de réception en liaison montante CB.

8. Le procédé selon la Revendication 1, comprenant en outre la réception des un ou plusieurs messages d'accusé de réception par l'intermédiaire d'au moins un élément parmi un réseau cellulaire, un réseau protocole Internet par l'intermédiaire d'un routeur fidélité sans fil, Wi-Fi, et un réseau protocole Internet par l'intermédiaire d'un routeur Bluetooth.

9. Le procédé selon la Revendication 1, où la détermination du nombre de dispositifs de communication comprend l'exécution d'au moins une opération parmi :
l'accès à une capacité de dispositifs de communication à partir de la pluralité de dispositifs de communication destinée à la réception d'un message d'alerte CB en fonction de données de signalisation, et
l'identification de dispositifs de communication activés avec une application (2106) dans la zone d'alerte (404), où l'application (2106) est au moins une application parmi une application mobile ou une application de module d'identification d'abonné, SIM, comprenant un réglage permettant de recevoir des messages d'alerte CB.

10. Le procédé selon la Revendication 1, comprenant en outre :
l'identification d'un ensemble de dispositifs de communication incapables de recevoir le message d'alerte CB,
la recherche d'une technique de notification d'alerte de rechange pour chaque dispositif de communication dans l'ensemble de dispositifs de communication, où la technique de notification d'alerte de rechange est différente d'une technique d'alerte CB, et
l'envoi d'un message d'alerte à chaque dispositif de communication au moyen de la technique de notification d'alerte de rechange.

11. Le procédé selon la Revendication 1, comprenant en outre :
la détermination d'un décompte de messages d'accusé de réception reçus des un ou plusieurs dispositifs de communication, et
la détermination de statistiques associées à un nombre d'abonnés qui ont reçu le message d'alerte CB.

12. Un système d'alerte de radiodiffusion cellulaire, CB, (136) destiné à la gestion de messages d'alerte CB, le système d'alerte CB (136) comprenant :
une mémoire (214) destinée à la conservation en mémoire d'instructions destinées à la gestion des messages d'alerte CB, et
un processeur (212) couplé de manière opérationnelle à la mémoire (214) de façon à exécuter les instructions conservées en mémoire dans la mémoire (214), le processeur (212) étant configuré de façon à :
déterminer une pluralité de dispositifs de communication capables de recevoir le message d'alerte CB dans une zone d'alerte (404) à partir d'un nombre de dispositifs de communication dans la zone d'alerte (404) qui sont des dispositifs de communication avec prise en charge CB, prise en charge MBMS et prise en charge CB au moyen d'applications mobiles ou d'applications SIM,
prédire la portée du message d'alerte CB vers le nombre de dispositifs de communication dans la zone d'alerte (404) avant le lancement d'une alerte CB,
envoyer un message d'alerte CB à la pluralité de dispositifs de communication dans une zone d'alerte (404) par l'intermédiaire d'un canal de communication sans fil, où chaque dispositif de la pluralité de dispositifs de communication comprend une application de gestion de messages CB (2106),
recevoir un ou plusieurs messages d'accusé de réception à partir d'un ou de plusieurs dispositifs de communication, en réponse à la réception du message d'alerte CB au niveau de la pluralité de dispositifs de communication, où les un ou plusieurs messages d'accusé de réception sont reçus à partir de l'application de gestion de messages CB (2106) dans des dispositifs de communication respectifs,
où une statistique d'accusé de réception en fonction des un ou plusieurs messages d'accusé de réception reçu des un ou plusieurs dispositifs de communication et du message d'alerte CB envoyé à la pluralité de dispositifs de communication est préparée,
déterminer un premier ensemble de dispositifs de communication en fonction de la statistique d'accusé de réception,
exécuter une action prédéfinie sur le premier ensemble de dispositifs de communication, où l'action prédéfinie comprend au moins une opération parmi le renvoi du message d'alerte CB au premier ensemble de dispositifs de communication, où l'action prédéfinie comprend l'établissement d'un canal de communication avec le premier ensemble de dispositifs de communication, et l'envoi d'un message d'alerte à des numéros de contact d'urgence associés à chaque dispositif de communication dans le premier ensemble de dispositifs de communication, où le message d'alerte est associé au message d'alerte CB, et
où la zone d'alerte (404) est déterminée en fonction de coordonnées géographiques correspondant à une zone prédéfinie sur une carte, et où la zone prédéfinie est une zone géographique vers laquelle le message d'alerte CB est envoyé, et des sites cellulaires spécifiques (126, 128, 130) associés à la zone d'alerte (404) sont identifiés au moyen des coordonnées géographiques identifiées.

13. Le système d'alerte CB (136) selon la Revendication 12, où le processeur (212) est configuré en outre de façon à :
identifier un ou plusieurs sites de réseau de communication associés à la zone d'alerte (404),
déterminer un ou plusieurs éléments de réseau (104-108) responsables de la gestion de la communication dans les un ou plusieurs sites de réseau de communication, et
remettre le message d'alerte CB à la pluralité de dispositifs de communication associés aux un ou plusieurs éléments de réseau (104-108).

14. Le système d'alerte CB (136) selon la Revendication 12, où les un ou plusieurs messages d'accusé de réception comprennent au moins un élément parmi une identité (ID) d'alerte unique associée au message d'alerte CB, l'emplacement d'un dispositif de communication, un message textuel prédéfini, un message composé par un utilisateur, des informations de canal de communication, un numéro d'identification d'utilisateur, un numéro d'annuaire d'abonné international de station mobile, MSISDN, une identité d'abonné mobile internationale, IMSI, un numéro de module d'identification d'abonné, SIM, un numéro d'identité d'équipement de station mobile internationale, IMEI, un identité de cellule, ID, un code de zone de localisation, un code de réseau mobile, MNC, et un code de pays mobile, MCC.
